# EUROPEAN PATENT APPLICATION

(11) **EP 4 765 682 A1**
(43) Date of publication of application: **24.06.2026**
(21) Application number: 23949195.4
(22) Date of filing: 13.10.2023
(51) Int. Cl.: H04B 10/27, H04J 14/02

(54) **OPTICAL COMMUNICATION SYSTEM AND OPTICAL COMMUNICATION PATH OPENING METHOD**

(30) Priority: 15.08.2023 WO PCT/JP2023/029519
(71) Applicant: NTT, Inc., Tokyo 100-8116 (JP)
(72) Inventor: KANEKO, Shin, Musashino-shi, Tokyo 180-8585 (JP); KANI, Junichi, Musashino-shi, Tokyo 180-8585 (JP); KIMURA, Yasutaka, Musashino-shi, Tokyo 180-8585 (JP); SHIBATA, Naotaka, Musashino-shi, Tokyo 180-8585 (JP)
(74) Representative: Santarelli
(86) International application number: PCT/JP2023/037161
(87) International publication number: WO 2025/037428

(57) **Abstract**

An optical communication system includes: a first optical multiplexing/demultiplexing unit that splits and outputs uplink control signal light and main signal light transmitted at different wavelengths from one or more newly connected subscriber devices; a subscriber device management control unit that transmits downlink control signal light to the one or more newly connected subscriber devices in response to the split uplink control signal light; an optical distribution unit that includes a plurality of first ports and a plurality of second ports, receives, via any one of the plurality of first ports, input of the main signal light transmitted from the one or more newly connected subscriber devices in response to the downlink control signal light and then split, and outputs the main signal light from any one of the plurality of second ports; a detection unit that detects the main signal light input to the first port; and an optical distribution control unit that controls connection between the ports of the optical distribution unit so as to connect the first port at which the main signal light has been detected and any one of the plurality of second ports to which a subscriber device serving as a communication counterpart of the one or more newly connected subscriber devices is connected.

## Description

### Technical Field

The present invention relates to an optical communication system and an optical communication path establishing method.

The present application claims priority on the basis of PCT/JP2023/029519 filed in Japan on August 15, 2023, the contents of which are incorporated herein by reference.

### Background Art

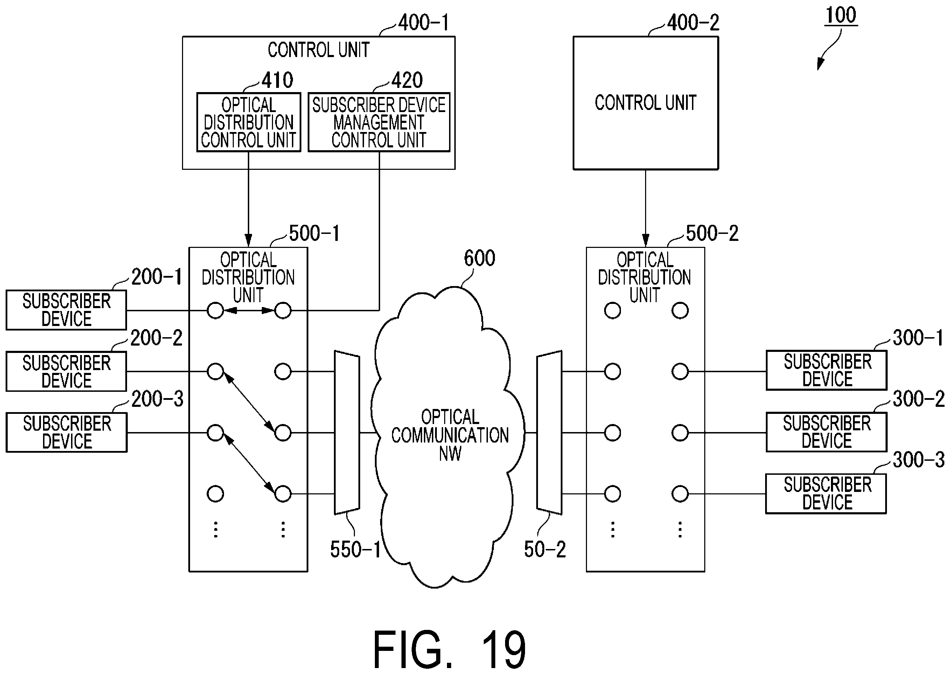

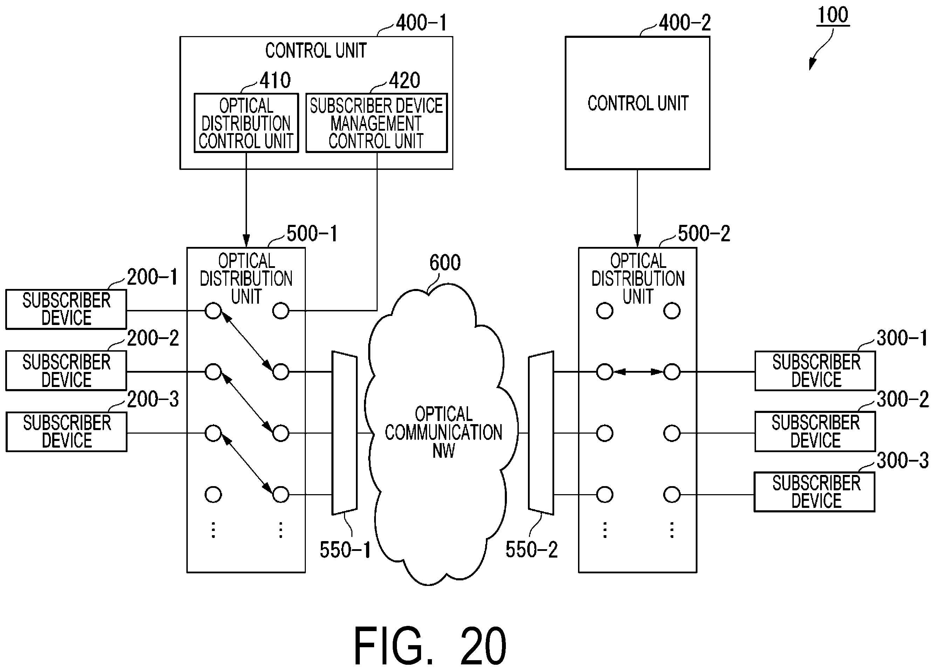

In a conventional optical communication system, a subscriber device needs to establish an optical path for connection to a subscriber device serving as a communication counterpart in order to perform communication. Figs. 19 and 20 show a method of establishing an optical path in a conventional optical communication system 100. As shown in Fig. 19, the conventional optical communication system 100 includes a plurality of subscriber devices 200-1 to 200-3, a plurality of subscriber devices 300-1 to 300-3, a plurality of control units 400-1 to 400-2, a plurality of optical distribution units 500-1 to 500-2, and a plurality of wavelength multiplexing/demultiplexing units 550-1 to 550-2.

Note that the subscriber device 200-1 is not connected to the optical distribution unit 500-1, the subscriber devices 200-2 to 200-3 are connected to the optical distribution unit 500-1 via optical transmission lines, and the subscriber devices 300-1 to 300-3 are connected to the optical distribution unit 500-2 via optical transmission lines. The optical distribution unit 500-1 and the optical distribution unit 500-2 are connected via an optical communication NW 600 including an optical transmission line and the wavelength multiplexing/demultiplexing units 550-1 to 550-2. The control unit 400-1 manages the subscriber devices 200 and controls operation of the optical distribution unit 500-1. The control unit 400-2 manages the subscriber devices 300 and controls operation of the optical distribution unit 500-2.

When a user tries to start communication via the subscriber device 200-1, the subscriber device 200-1 is newly connected to the optical distribution unit 500-1. When the subscriber device 200-1 is initially connected, an optical distribution control unit 410 sets connection between ports of the optical distribution unit 500-1 such that the subscriber device 200-1 communicates with a subscriber device management control unit 420. This makes it possible to exchange information necessary for registration and authentication of the subscriber device 200-1 between the subscriber device 200-1 and the subscriber device management control unit 420 and to give an instruction on a light emission wavelength used for transmission and reception to the subscriber device 200-1 from the subscriber device management control unit 420. A control signal called an auxiliary management and control channel (AMCC) can be used as a signal for managing and controlling the subscriber device. The AMCC signal includes, for example, state information indicating a transmission/reception wavelength, a transmission light intensity, a temperature, and the like of an optical transceiver.

When the registration and authentication of the subscriber device 200-1, the wavelength setting, and the like are completed, as shown in Fig. 20, the optical distribution control unit 410 changes the setting of connection between the ports of the optical distribution unit 500-1 such that an optical signal transmitted from the subscriber device 200-1 is transferred to the subscriber device 300 (for example, subscriber device 300-1) serving as a communication counterpart. Similarly, the control unit 400-2 changes a setting of connection between ports of the optical distribution unit 500-2 such that an optical signal transmitted from the subscriber device 200-1 is transferred to the subscriber device 300 (for example, subscriber device 300-1) serving as a communication counterpart. This makes it possible to establish an optical path that connects the subscriber device 200-1 and the subscriber device 300-1 as shown in Fig. 20.

However, in the configuration of the conventional optical communication system 100 shown in Figs. 19 and 20, there is no control channel that transmits control signals between the control units 400 and the subscriber devices 200 and 300 after the optical path is once established. Meanwhile, with a configuration of an optical communication system 150 shown in Fig. 21, the control units 400 can exchange control signals with the plurality of subscriber devices 200 and 300 even after the optical path is once established.

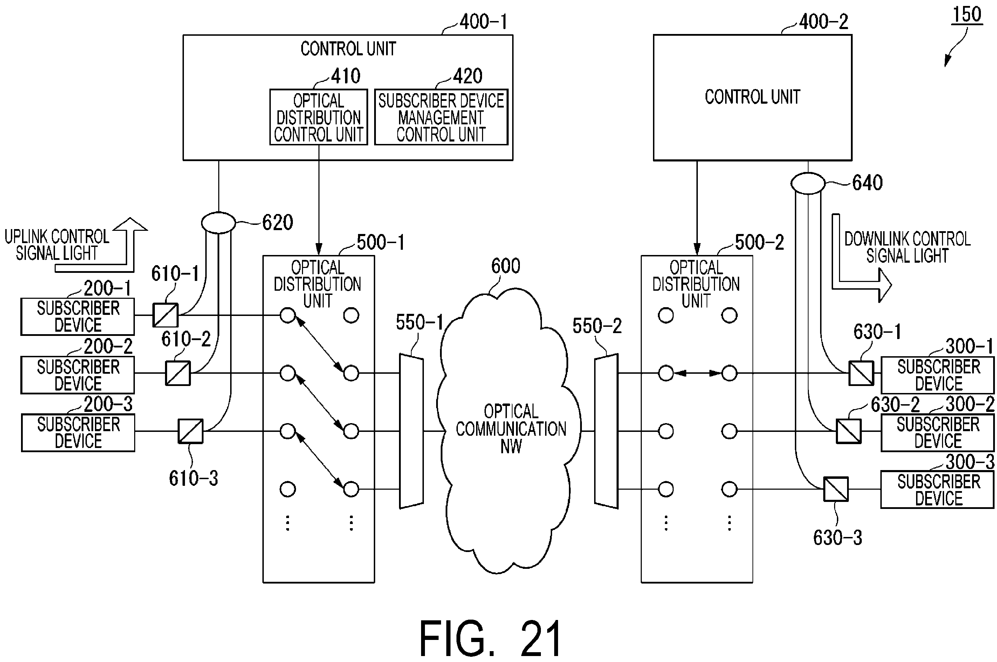

Fig. 21 shows a configuration example of the conventional optical communication system 150. As shown in Fig. 21, the conventional optical communication system 150 includes the plurality of subscriber devices 200-1 to 200-3, the plurality of subscriber devices 300-1 to 300-3, the plurality of control units 400-1 to 400-2, the plurality of optical distribution units 500-1 to 500-2, the plurality of wavelength multiplexing/demultiplexing units 550-1 to 550-2, a plurality of first optical multiplexing/demultiplexing units 610-1 to 610-3, a second optical multiplexing/demultiplexing unit 620, a plurality of first optical multiplexing/demultiplexing units 630-1 to 630-3, and a second optical multiplexing/demultiplexing unit 640. The optical communication system 150 has a configuration in which the plurality of first optical multiplexing/demultiplexing units 610-1 to 610-3, the second optical multiplexing/demultiplexing unit 620, the plurality of first optical multiplexing/demultiplexing units 630-1 to 630-3, and the second optical multiplexing/demultiplexing unit 640 are added to the optical communication system 100 shown in Figs. 19 and 20.

The plurality of first optical multiplexing/demultiplexing units 610-1 to 610-3 is provided between the plurality of subscriber devices 200-1 to 200-3 and the optical distribution unit 500-1. The second optical multiplexing/demultiplexing unit 620 is provided between the plurality of first optical multiplexing/demultiplexing units 610-1 to 610-3 and the control unit 400-1. The plurality of first optical multiplexing/demultiplexing units 630-1 to 630-3 is provided between the plurality of subscriber devices 300-1 to 300-3 and the optical distribution unit 500-2. The second optical multiplexing/demultiplexing unit 640 is provided between the plurality of first optical multiplexing/demultiplexing units 630-1 to 630-3 and the control unit 400-2.

The subscriber devices 200-1 to 200-3 output an uplink control signal for the control unit 400-1 at a wavelength different from that of an optical carrier that carries a main signal (hereinafter, referred to as "main signal light"). The plurality of first optical multiplexing/demultiplexing units 610-1 to 610-3 transfers uplink control signal light transmitted from the subscriber devices 200-1 to 200-3 to the second optical multiplexing/demultiplexing unit 620. The second optical multiplexing/demultiplexing unit 620 multiplexes the uplink control signal light transferred from the plurality of first optical multiplexing/demultiplexing units 610-1 to 610-3 and outputs the multiplexed uplink control signal light to the control unit 400-1. The control unit 400-2 outputs a downlink control signal for the plurality of subscriber devices 300-1 to 300-3 at a wavelength different from that of the main signal light. The second optical multiplexing/demultiplexing unit 640 splits downlink control signal light output from the control unit 400-2 and outputs the split downlink control signal light to the plurality of first optical multiplexing/demultiplexing units 630-1 to 630-3. The plurality of first optical multiplexing/demultiplexing units 630-1 to 630-3 wavelength-multiplexes the downlink control signal light and the main signal light and outputs the wavelength-multiplexed signal light to the plurality of subscriber devices 300-1 to 300-3.

With the above configuration, the control units 400-1 to 400-2 exchange information necessary for registration, authentication, and optical path establishment with the subscriber devices 200 and 300 whose optical path is not yet established via the plurality of first optical multiplexing/demultiplexing units 610-1 to 610-3 and the second optical multiplexing/demultiplexing unit 620 or via the plurality of first optical multiplexing/demultiplexing units 630-1 to 630-3 and the second optical multiplexing/demultiplexing unit 640. Similarly, the control units 400-1 to 400-2 can exchange control information with the subscriber devices 200 and 300 whose optical path is already established via the plurality of first optical multiplexing/demultiplexing units 610-1 to 610-3 and the second optical multiplexing/demultiplexing unit 620 or via the plurality of first optical multiplexing/demultiplexing units 630-1 to 630-3 and the second optical multiplexing/demultiplexing unit 640.

### Citation List

### Non Patent Literature

Non Patent Literature 1: Takuya Kanai, Kazuaki Honda, Yasunari Tanaka, Shin Kaneko, Kazutaka Hara, Junichi Kani, Tomoaki Yoshida, "Photonic Gateway for All-Photonics Network", IEICE general conference, B-8-20, March 2021.

### Summary of Invention

### Technical Problem

In order to establish an optical path to a newly connected subscriber device, an optical distribution control unit needs to set connection between ports of an optical distribution unit such that main signal light transmitted from the newly connected subscriber device is transferred to a subscriber device serving as a communication counterpart as soon as registration and authentication of the newly connected subscriber device, a wavelength setting, and the like are completed. At this time, in order for the optical distribution control unit to appropriately change the setting of the connection between the ports of the optical distribution unit, a control unit needs to recognize to which port of the optical distribution unit the newly connected subscriber device is connected via an optical transmission line. However, in the conventional configuration shown in Fig. 21, the control unit cannot recognize to which port of the optical distribution unit the newly connected subscriber device is connected via an optical transmission line, and thus there is a problem that an optical path that is an optical route cannot be established.

In view of the above circumstances, an object of the present invention is to provide a technique capable of, in an optical communication system including an optical multiplexing/demultiplexing unit between an optical distribution unit or a control unit and a subscriber device, establishing an optical route that communicably connects a newly connected subscriber device and a subscriber device serving as a communication counterpart.

### Solution to Problem

An aspect of the present invention is an optical communication system including: a first optical multiplexing/demultiplexing unit that splits and outputs uplink control signal light and main signal light transmitted at different wavelengths from one or more newly connected subscriber devices; a subscriber device management control unit that transmits control signal light that gives an instruction to output at least main signal light to the one or more newly connected subscriber devices in response to the uplink control signal light split by the first optical multiplexing/demultiplexing unit; an optical distribution unit that includes a plurality of first ports and a plurality of second ports, receives, via any one of the plurality of first ports, input of the main signal light transmitted from the one or more newly connected subscriber devices in response to the control signal light and split by the first optical multiplexing/demultiplexing unit, and outputs the main signal light from any one of the plurality of second ports; a detection unit that detects the main signal light input to any one of the plurality of first ports included in the optical distribution unit; and an optical distribution control unit that controls connection between the ports of the optical distribution unit so as to connect the first port at which the main signal light has been detected by the detection unit and any one of the plurality of second ports to which a subscriber device serving as a communication counterpart of the one or more newly connected subscriber devices is connected.

An aspect of the present invention is an optical communication path establishing method including: splitting and outputting uplink control signal light and main signal light transmitted at different wavelengths from one or more newly connected subscriber devices; transmitting control signal light that gives an instruction to output at least main signal light to the one or more newly connected subscriber devices in response to the split uplink control signal light; causing an optical distribution unit including a plurality of first ports and a plurality of second ports to receive, via any one of the plurality of first ports, input of the main signal light transmitted from the one or more newly connected subscriber devices in response to the control signal light and then split; detecting the main signal light input to any one of the plurality of first ports included in the optical distribution unit; and controlling connection between the ports of the optical distribution unit so as to connect the first port at which the main signal light has been detected and any one of the plurality of second ports to which a subscriber device serving as a communication counterpart of the one or more newly connected subscriber devices is connected.

### Advantageous Effects of Invention

According to the present invention, it is possible to, in an optical communication system including an optical multiplexing/demultiplexing unit between an optical distribution unit or a control unit and a subscriber device, establish an optical route that communicably connects a newly connected subscriber device and a subscriber device serving as a communication counterpart.

### Brief Description of Drawings

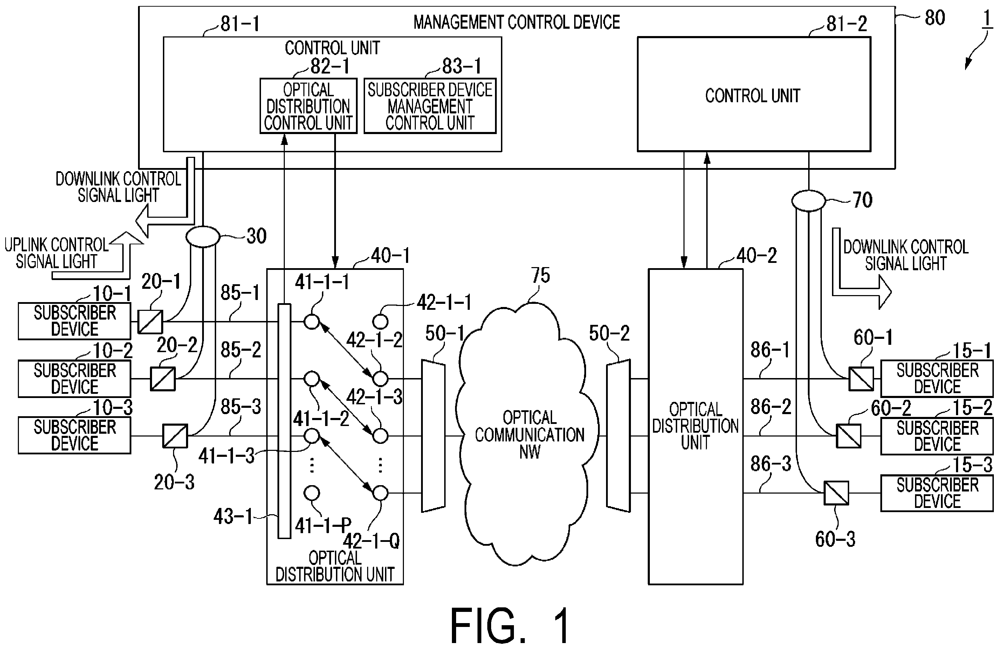

[Fig. 1] A diagram showing an example of the configuration of an optical communication system according to a first embodiment.

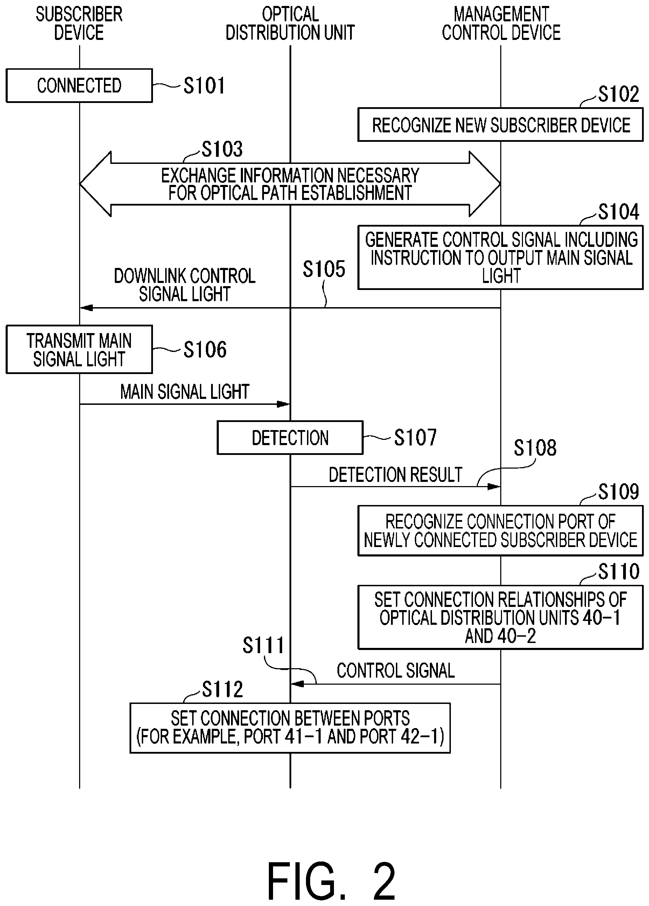

[Fig. 2] A sequence diagram showing a flow of optical path establishing processing (part 1) of the optical communication system according to the first embodiment.

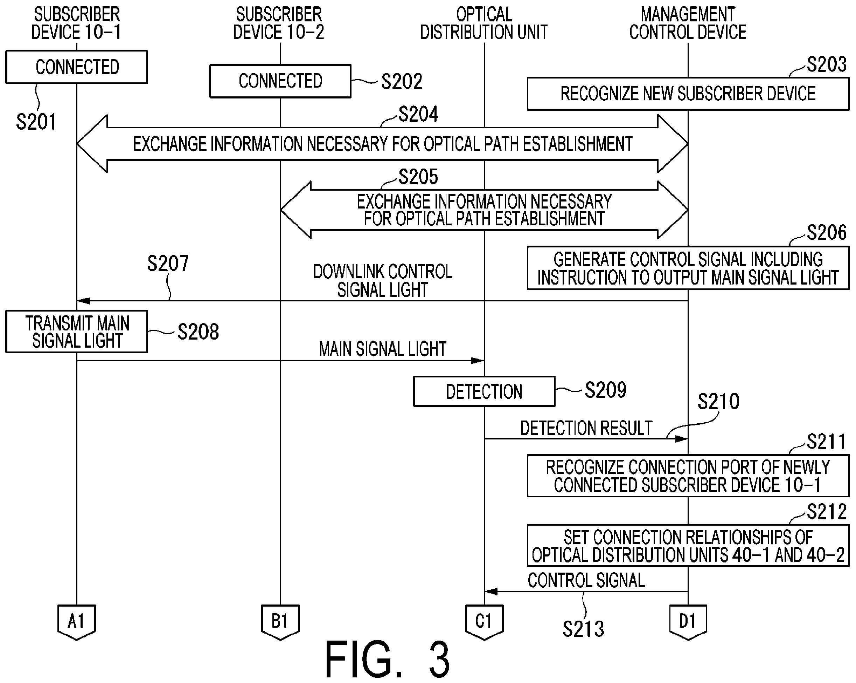

[Fig. 3] A sequence diagram showing a flow of the optical path establishing processing (part 2) of the optical communication system according to the first embodiment.

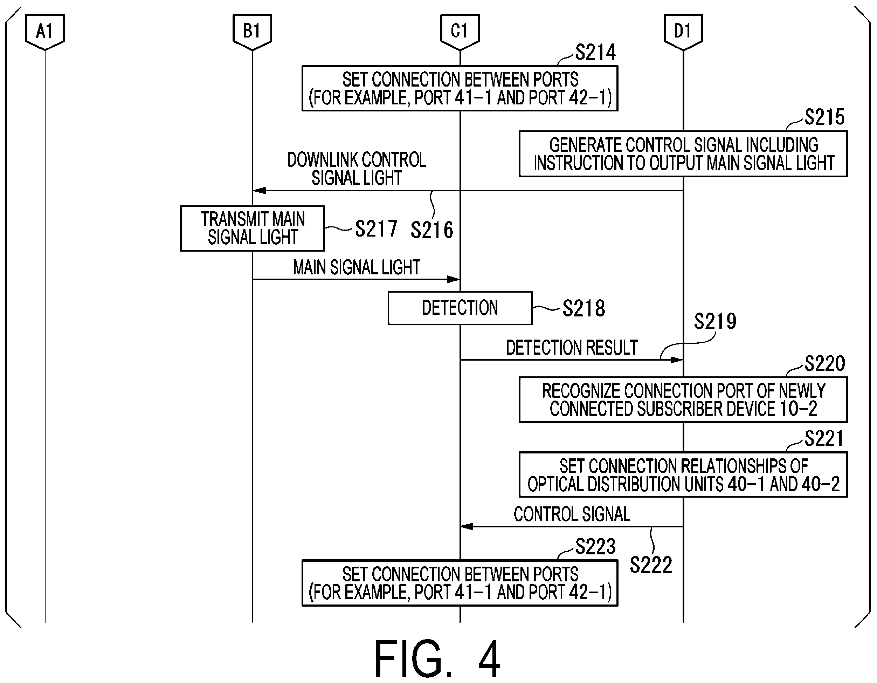

[Fig. 4] A sequence diagram showing a flow of the optical path establishing processing (part 2) of the optical communication system according to the first embodiment.

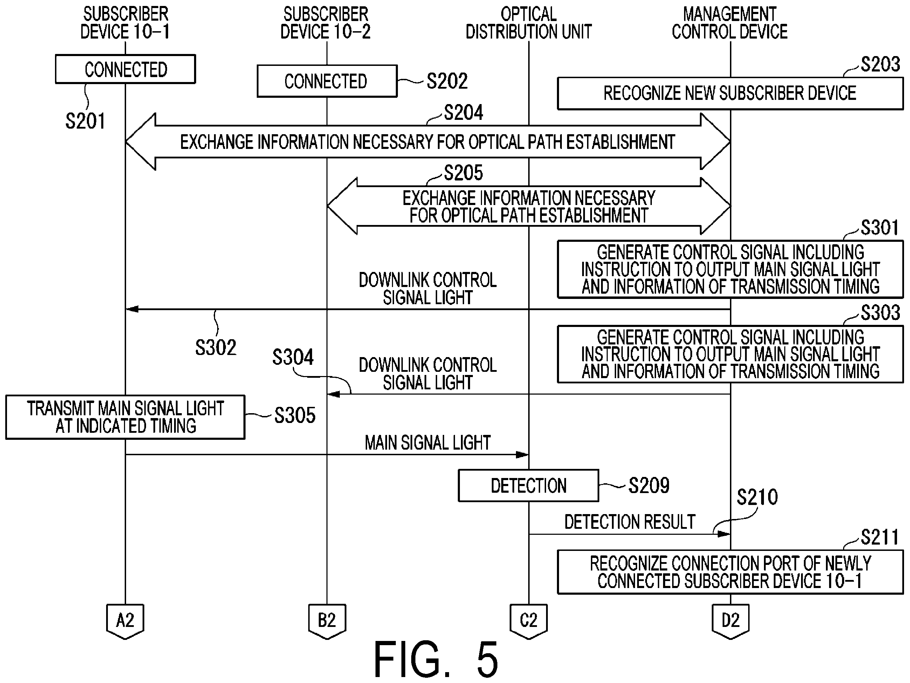

[Fig. 5] A sequence diagram showing a flow of the optical path establishing processing (part 3) of the optical communication system according to the first embodiment.

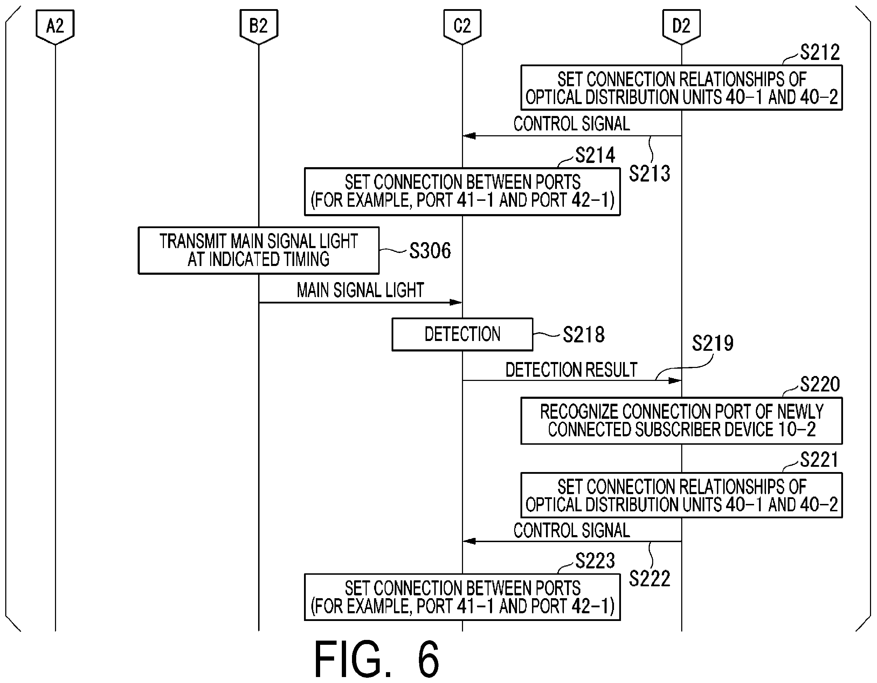

[Fig. 6] A sequence diagram showing a flow of the optical path establishing processing (part 3) of the optical communication system according to the first embodiment.

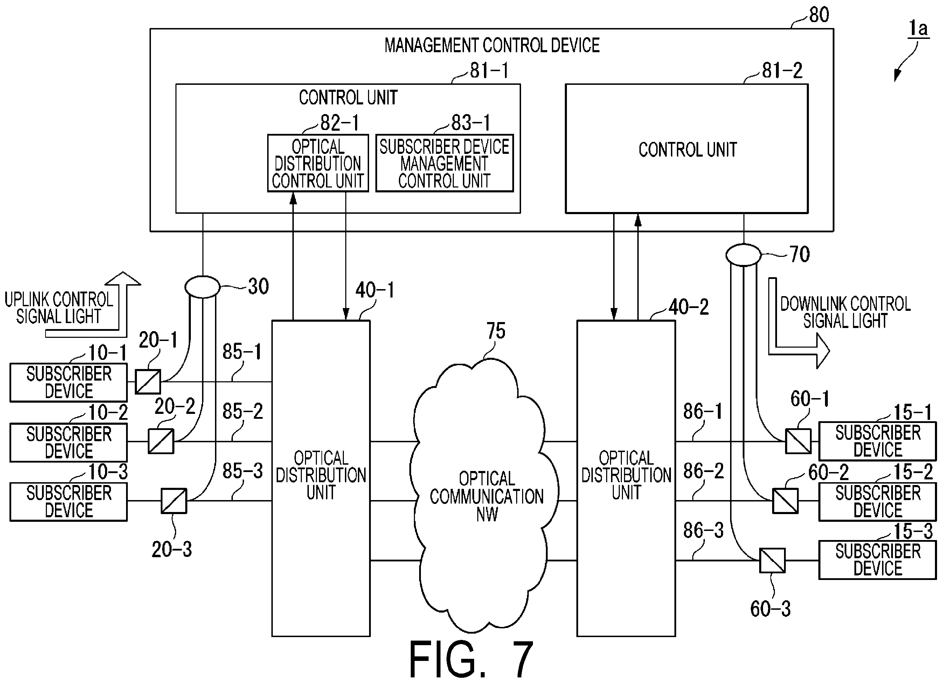

[Fig. 7] A diagram showing an example of the configuration of an optical communication system according to a first modification of the first embodiment.

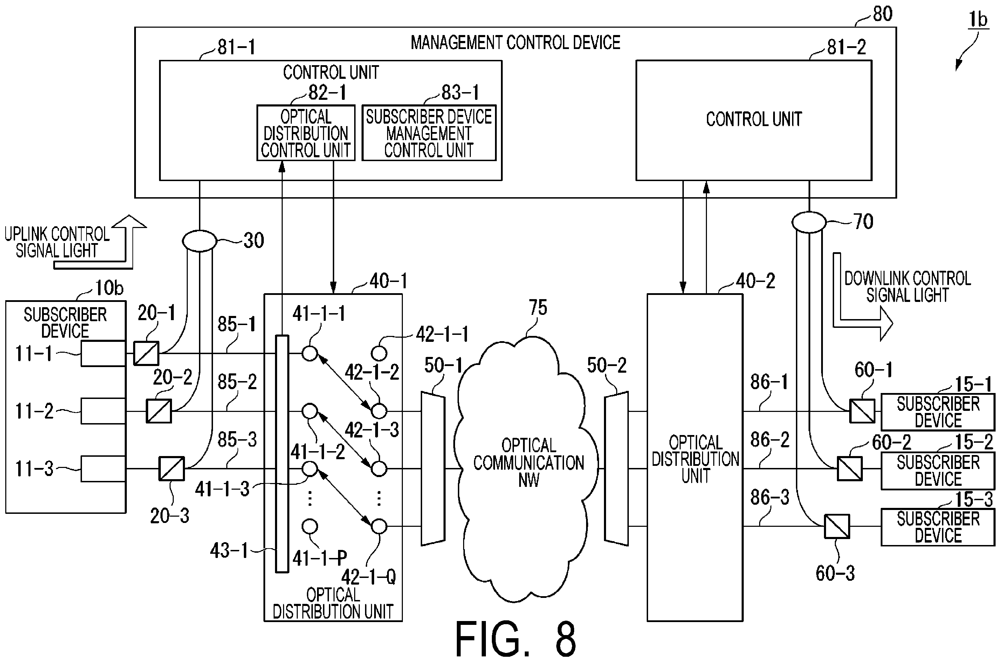

[Fig. 8] A diagram showing an example of the configuration of an optical communication system according to a second embodiment.

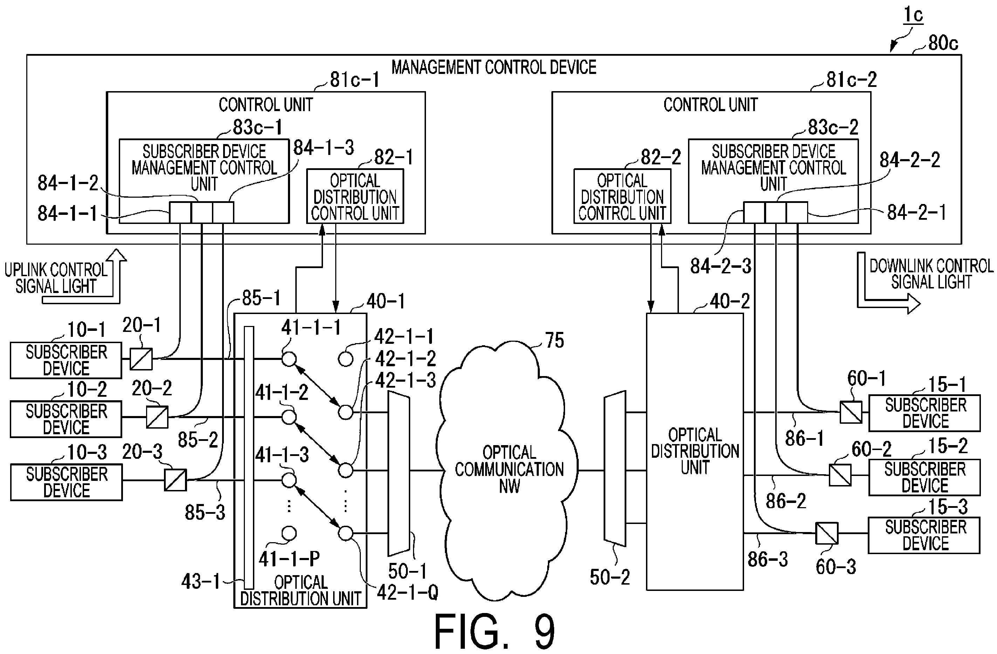

[Fig. 9] A diagram showing an example of the configuration of an optical communication system according to a third embodiment.

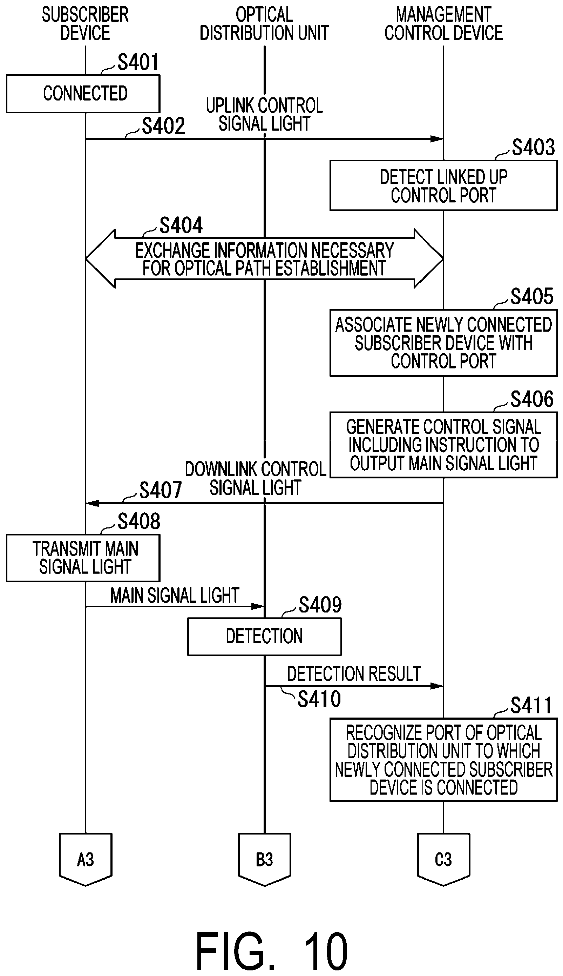

[Fig. 10] A sequence diagram showing a flow of the optical path establishing processing (part 1) of the optical communication system according to the third embodiment.

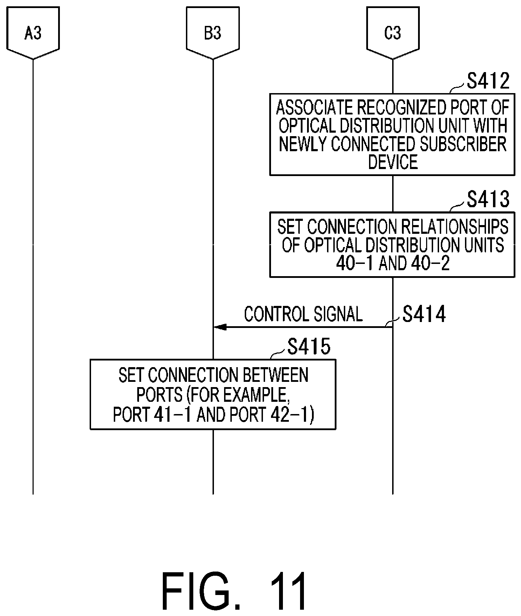

[Fig. 11] A sequence diagram showing a flow of the optical path establishing processing (part 1) of the optical communication system according to the third embodiment.

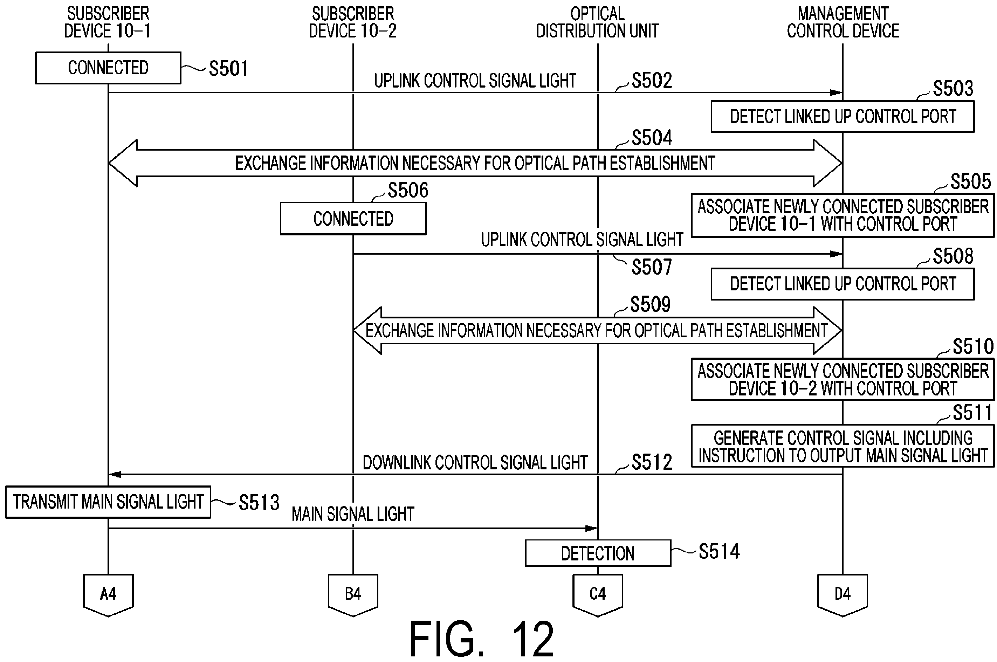

[Fig. 12] A sequence diagram showing a flow of the optical path establishing processing (part 2) of the optical communication system according to the third embodiment.

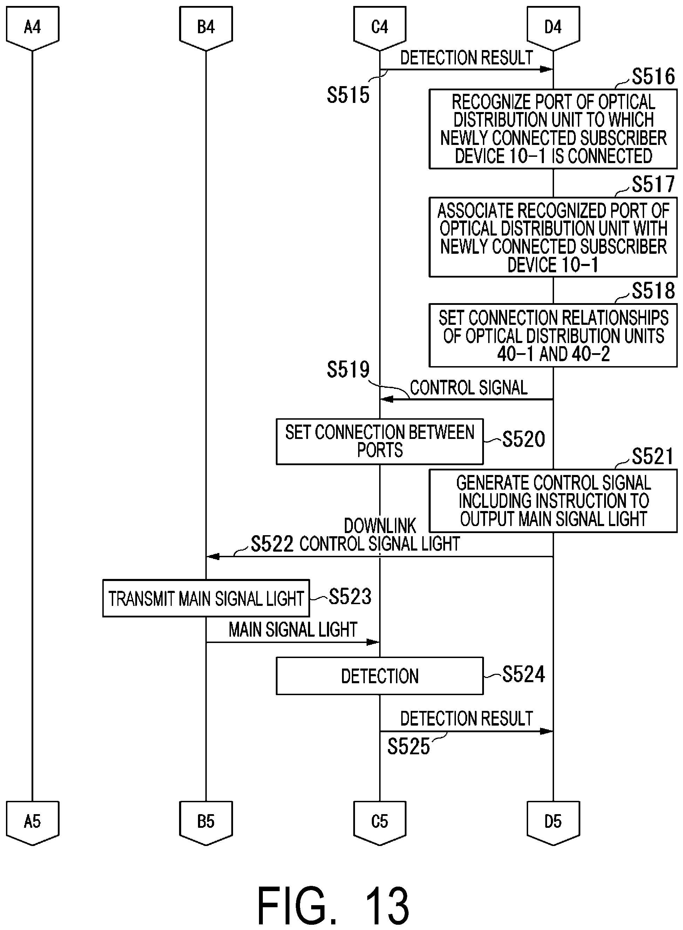

[Fig. 13] A sequence diagram showing a flow of the optical path establishing processing (part 2) of the optical communication system according to the third embodiment.

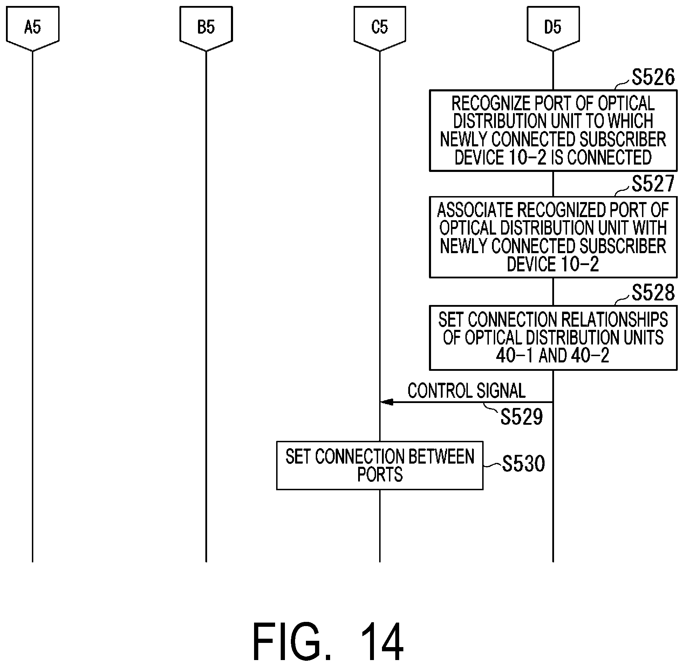

[Fig. 14] A sequence diagram showing a flow of the optical path establishing processing (part 2) of the optical communication system according to the third embodiment.

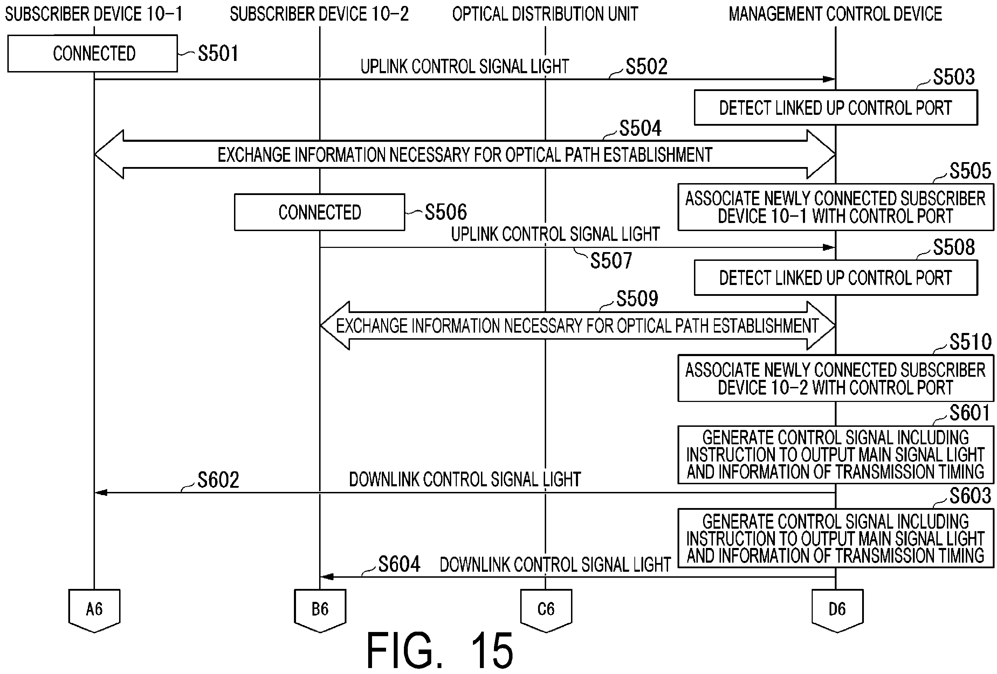

[Fig. 15] A sequence diagram showing a flow of the optical path establishing processing (part 3) of the optical communication system according to the third embodiment.

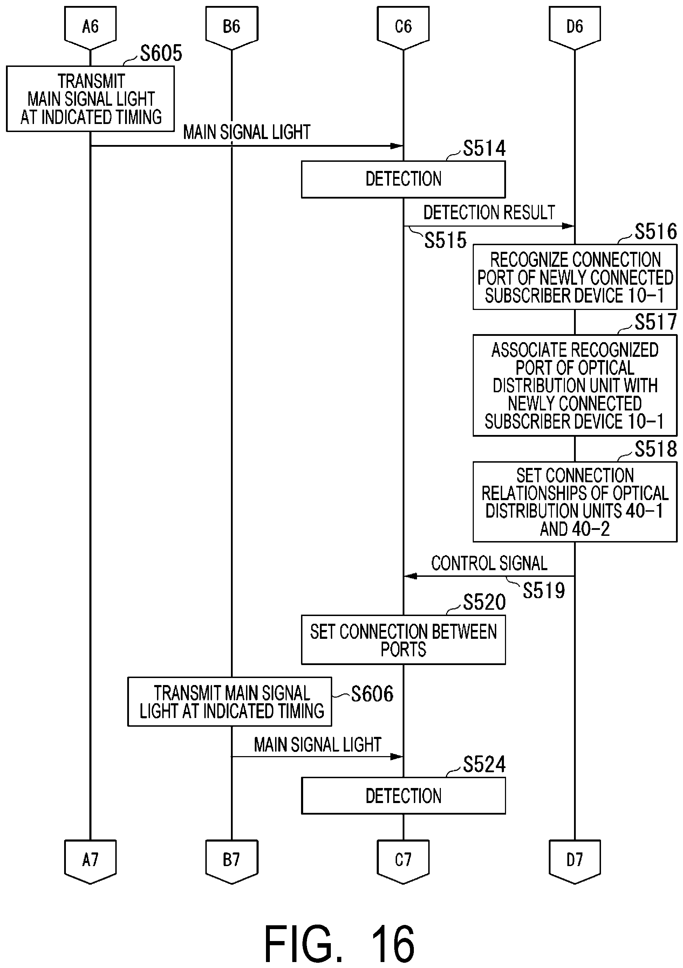

[Fig. 16] A sequence diagram showing a flow of the optical path establishing processing (part 3) of the optical communication system according to the third embodiment.

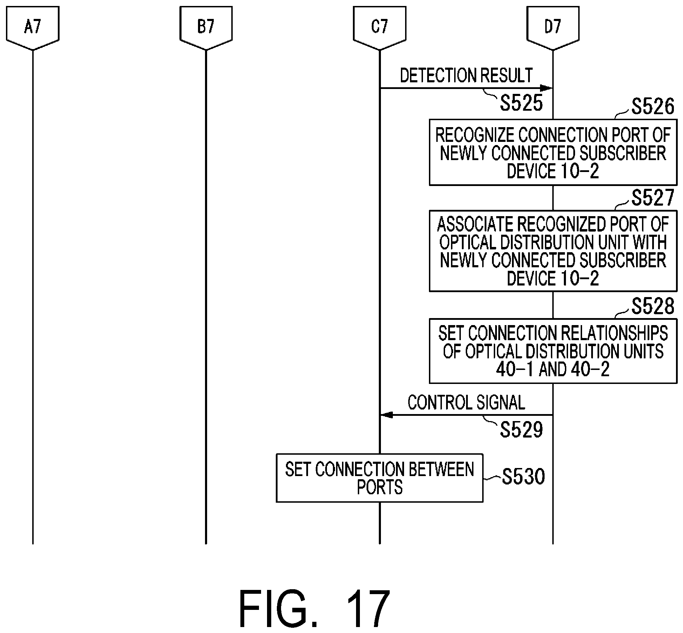

[Fig. 17] A sequence diagram showing a flow of the optical path establishing processing (part 3) of the optical communication system according to the third embodiment.

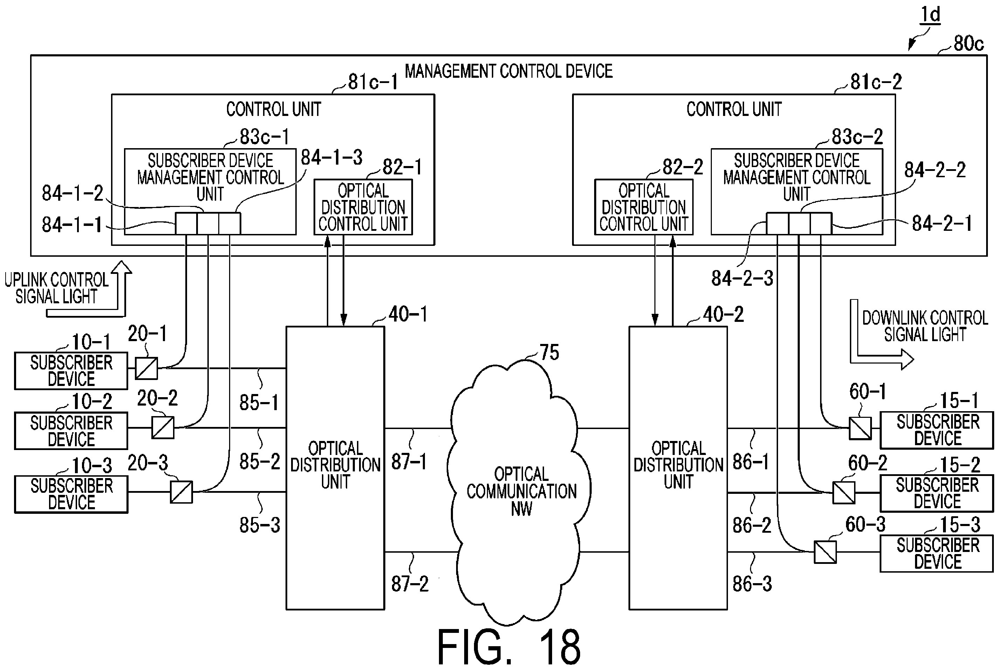

[Fig. 18] A diagram showing an example of the configuration of an optical communication system according to a first modification of the third embodiment.
[Fig. 19] A diagram showing a method of establishing an optical path in a conventional optical communication system.
[Fig. 20] A diagram showing a method of establishing an optical path in the conventional optical communication system.
[Fig. 21] A diagram showing an example of the configuration of a conventional optical communication system.

### Description of Embodiments

Hereinafter, embodiments of the present invention will be described with reference to the drawings.

### (First Embodiment)

Fig. 1 shows a configuration example of an optical communication system 1 according to a first embodiment. The optical communication system 1 includes a plurality of subscriber devices 10 (for example, subscriber devices 10-1 to 10-3), a plurality of subscriber devices 15 (for example, subscriber devices 15-1 to 15-3), a plurality of first optical multiplexing/demultiplexing units 20 (for example, first optical multiplexing/demultiplexing units 20-1 to 20-3), a second optical multiplexing/demultiplexing unit 30, a plurality of optical distribution units 40 (for example, optical distribution units 40-1 to 40-2), a plurality of wavelength multiplexing/demultiplexing units 50 (for example, wavelength multiplexing/demultiplexing units 50-1 to 50-2), a plurality of first optical multiplexing/demultiplexing units 60 (for example, first optical multiplexing/demultiplexing units 60-1 to 60-3), a second optical multiplexing/demultiplexing unit 70, and a management control device 80. In the first embodiment, an example where the subscriber device 10 transmits an optical signal and the subscriber device 15 receives the optical signal transmitted from the subscriber device 10 will be described.

In the following description, a direction from the subscriber devices 10 and 15 toward the management control device 80 is referred to as an uplink direction, and a direction from the management control device 80 toward the subscriber devices 10 and 15 is referred to as a downlink direction. The numbers of the subscriber devices 10, the subscriber devices 15, the first optical multiplexing/demultiplexing units 20 and 60, the second optical multiplexing/demultiplexing units 30 and 70, the optical distribution units 40, and the wavelength multiplexing/demultiplexing units 50 included in the optical communication system 1 are not limited to the numbers shown in Fig. 1.

Connection is made by using optical transmission lines between the subscriber devices 10 and the first optical multiplexing/demultiplexing units 20, between the first optical multiplexing/demultiplexing units 20 and the second optical multiplexing/demultiplexing unit 30, between the second optical multiplexing/demultiplexing units 30 and 70 and the management control device 80, between the first optical multiplexing/demultiplexing units 20 and the optical distribution unit 40-1, between the optical distribution unit 40-1 and the wavelength multiplexing/demultiplexing unit 50-1, between the wavelength multiplexing/demultiplexing unit 50-1 and the wavelength multiplexing/demultiplexing unit 50-2, between the wavelength multiplexing/demultiplexing unit 50-2 and the optical distribution unit 40-2, between the optical distribution unit 40-2 and the first optical multiplexing/demultiplexing units 60, between the first optical multiplexing/demultiplexing units 60 and the subscriber devices 15, and between the first optical multiplexing/demultiplexing units 60 and the second optical multiplexing/demultiplexing unit 70. The optical transmission lines are, for example, optical fibers. An optical communication NW 75 is configured between the wavelength multiplexing/demultiplexing unit 50-1 and the wavelength multiplexing/demultiplexing unit 50-2.

The subscriber device 10 includes an optical transceiver. The optical transceiver is, for example, a coherent transceiver. The subscriber device 10 transmits and receives an optical signal such as a main signal and a control signal by using the optical transceiver. The subscriber device 10 whose optical path is not yet established transmits light with a wavelength that reaches the optical distribution unit 40-1 in response to an instruction from the management control device 80. The subscriber device 10 whose optical path is not yet established transmits the light with the wavelength that reaches the optical distribution unit 40-1 after receiving, for example, control signal light that gives an instruction to output main signal light from the management control device 80. The wavelength used here is issued as a notification to the subscriber device 10 whose optical path is not yet established in accordance with exchange of information necessary for registration, authentication, and optical path establishment with the management control device 80.

The information necessary for optical path establishment includes, for example, information of a wavelength used for transmission and reception and information of the subscriber device 15 serving as a communication target. The light with the wavelength that reaches the optical distribution unit 40-1 is light within a range of wavelengths transmitted from a port on the subscriber device 10 side to a port on the optical distribution unit 40-1 side among input/output ports of the first optical multiplexing/demultiplexing unit 20.

The subscriber device 10 outputs uplink control signal light for the management control device 80 as an optical signal with a wavelength different from that of the main signal light. The main signal light is light with the wavelength that reaches the optical distribution unit 40-1. A wavelength of the uplink control signal light transmitted by the subscriber device 10 falls within a range of wavelengths transmitted from the port on the subscriber device 10 side to a port on the second optical multiplexing/demultiplexing unit 30 side among the input/output ports of the first optical multiplexing/demultiplexing unit 20. Note that the wavelengths of the uplink control signal light transmitted by the subscriber devices 10 may all be the same. Each of the subscriber devices 10 is, for example, an optical network unit (ONU) installed in a subscriber's home. In the following description, an example where the subscriber device 10-1 is a subscriber device to be newly connected to the optical distribution unit 40-1 will be described, and a subscriber device to be newly connected to the optical distribution unit 40 will be described as a new subscriber device.

The subscriber device 15 performs communication with the subscriber device 10. The subscriber device 15 includes an optical transceiver. The subscriber device 15 transmits and receives an optical signal such as a main signal and a control signal by using the optical transceiver. The subscriber device 15 also performs processing similar to that of the subscriber device 10 as processing before optical path establishment. The subscriber device 15 receives downlink control signal light transmitted from the management control device 80 and main signal light transmitted through an optical transmission line 86. The subscriber device 15 is, for example, an ONU installed in a subscriber's home.

The first optical multiplexing/demultiplexing unit 20 is provided between the subscriber device 10 and the optical distribution unit 40-1. The first optical multiplexing/demultiplexing unit 20 splits and outputs the uplink control signal light and the main signal light transmitted from each subscriber device 10 at different wavelengths. In the following description, the splitting performed by the first optical multiplexing/demultiplexing unit 20 includes a case of separating the uplink control signal light and the main signal light and a case of splitting the uplink control signal light and the main signal light at a predetermined ratio. In the case of separating the uplink control signal light and the main signal light, the first optical multiplexing/demultiplexing unit 20 separates the uplink control signal light and the main signal light on the basis of the wavelength, outputs the separated uplink control signal light to the second optical multiplexing/demultiplexing unit 30, and outputs the separated main signal light to the optical distribution unit 40-1. In the case of splitting the uplink control signal light and the main signal light at the predetermined ratio, the first optical multiplexing/demultiplexing unit 20 splits the uplink control signal light and the main signal light together at the predetermined ratio, and outputs the split signal light to the second optical multiplexing/demultiplexing unit 30 and the optical distribution unit 40-1. As the first optical multiplexing/demultiplexing unit 20 in the first embodiment, an optical multiplexer/demultiplexer having the wavelength selectivity (for example, wavelength filter) is used.

The second optical multiplexing/demultiplexing unit 30 is provided between the first optical multiplexing/demultiplexing unit 20 and a control unit 81-1. The second optical multiplexing/demultiplexing unit 30 multiplexes the uplink control signal light transferred from each first optical multiplexing/demultiplexing unit 20 and outputs the multiplexed uplink control signal light to the control unit 81-1. The second optical multiplexing/demultiplexing unit 30 is, for example, an optical coupler.

The optical distribution unit 40-1 includes P (P is an integer of 2 or more) ports 41-1, Q (Q is an integer of 2 or more) ports 42-1, and a photodetection unit 43-1. The optical distribution unit 40-2 has a configuration similar to that of the optical distribution unit 40-1, and thus the configuration of the optical distribution unit 40-1 will be described as an example. An optical signal input to a certain port of the optical distribution unit 40 is output from another port. For example, an optical signal input to the port 41-1 of the optical distribution unit 40 is output from the port 42-1. The optical distribution unit 40 in the first embodiment is a fiber cross connect (FXC) that outputs light input from each port to a port for which a connection relationship is set as a connection port for the port regardless of the wavelength. The optical distribution unit 40 in the first embodiment is, for example, a spatial optical switch in which micro electro mechanical systems (MEMS) or a piezoelectric actuator is used. The port 41-1 is an aspect of a first port, and the port 42-1 is an aspect of a second port.

The photodetection unit 43-1 detects an optical signal input to the port 41-1. In a case of detecting an optical signal, the photodetection unit 43-1 notifies the management control device 80 of a detection result including the port at which the optical signal has been detected. The notification from the photodetection unit 43-1 to the management control device 80 may be performed via an electric line that connects the management control device 80 and the optical distribution unit 40-1. By the notification transmitted from the photodetection unit 43-1, the management control device 80 can recognize input of light to a port to which the subscriber device 10 is newly connected.

The wavelength multiplexing/demultiplexing unit 50 multiplexes or demultiplexes an input optical signal in accordance with the wavelength. For example, the wavelength multiplexing/demultiplexing unit 50-1 generates multiplexed signal light by multiplexing optical signals with a plurality of wavelengths output from the optical distribution unit 40-1. The wavelength multiplexing/demultiplexing unit 50-1 outputs the generated multiplexed signal light to the optical transmission line. For example, the wavelength multiplexing/demultiplexing unit 50-2 demultiplexes the multiplexed signal light input via the optical transmission line for each wavelength and outputs the demultiplexed signal light. The wavelength multiplexing/demultiplexing unit 50 is, for example, an arrayed waveguide grating (AWG) or a wavelength selective switch (WSS).

The first optical multiplexing/demultiplexing unit 60 is provided between the subscriber device 15 and the optical distribution unit 40-2. The first optical multiplexing/demultiplexing unit 60 wavelength-multiplexes main signal light transmitted through the optical transmission line and downlink control signal light output from the second optical multiplexing/demultiplexing unit 70 and outputs the wavelength-multiplexed signal light to the subscriber device 15. As the first optical multiplexing/demultiplexing unit 60 in the first embodiment, an optical multiplexer/demultiplexer having the wavelength selectivity (for example, wavelength filter) is used.

The second optical multiplexing/demultiplexing unit 70 is provided between the first optical multiplexing/demultiplexing unit 60 and a control unit 81-2. The second optical multiplexing/demultiplexing unit 70 splits downlink control signal light output from the control unit 81-2 and outputs the split downlink control signal light to each first optical multiplexing/demultiplexing unit 60. The second optical multiplexing/demultiplexing unit 70 is, for example, an optical coupler.

The management control device 80 controls at least the subscriber devices 10 and 15 and the optical distribution units 40. Here, the control of the subscriber devices 10 and 15 is, for example, control of a timing of transmission of main signal light, allocation of light emission wavelengths to the subscriber devices 10 and 15, a light stop instruction, and a wavelength change instruction. The control of the optical distribution units 40 is, for example, connection switching between the ports of the optical distribution units 40. The management control device 80 includes a plurality of control units 81 (for example, control units 81-1 to 81-2). The control units 81 control the respective optical distribution units 40 and the subscriber devices 10 and 15 accommodated in the respective optical distribution units 40. For example, the control unit 81-1 controls the optical distribution unit 40-1 and the subscriber devices 10 accommodated in the optical distribution unit 40-1. For example, the control unit 81-2 controls the optical distribution unit 40-2 and the subscriber devices 15 accommodated in the optical distribution unit 40-2.

The control unit 81-1 includes an optical distribution control unit 82-1 and a subscriber device management control unit 83-1. The control unit 81-2 has a configuration similar to that of the control unit 81-1. The control unit 81-1 and the control unit 81-2 perform similar processing except that a control target is different, and thus the optical distribution control unit 82-1 and the subscriber device management control unit 83-1 will be described as an example.

The optical distribution control unit 82-1 performs a route setting of an optical path by setting and switching connection between the ports of the optical distribution unit 40. The optical distribution control unit 82-1 controls the connection between the ports of the optical distribution unit 40 so as to connect, for example, the port 41-1 at which the main signal light has been detected by the photodetection unit 43-1 and the port 42-1 to which the subscriber device 15 serving as a communication counterpart of the new subscriber device is connected.

In a case where the new subscriber device is connected, the subscriber device management control unit 83-1 transmits, to the new subscriber device, control signal light that gives an instruction to output at least main signal light. The subscriber device management control unit 83-1 identifies to which port of the optical distribution unit 40 the new subscriber device is connected on the basis of a detection result transmitted from the optical distribution unit 40 after transmission of the control signal light. For example, the subscriber device management control unit 83-1 causes the subscriber devices 10 other than the new subscriber device serving as a transmission destination of the control signal light not to start transmission of the main signal light during a predetermined period after the transmission of the control signal light. Thus, only the main signal light transmitted from the new subscriber device serving as the transmission destination of the control signal light is newly detected in the optical distribution unit 40. By associating the detection result from the optical distribution unit 40 thus obtained with the new subscriber device serving as the transmission destination of the control signal light, to which port of the optical distribution unit 40 the new subscriber device is connected is identified. In this method, the subscriber device management control unit 83-1 recognizes a port newly photodetected by the photodetection unit 43 as a port to which the new subscriber device is connected while photodetection is being continued at the ports of the optical distribution unit 40 to which the subscriber devices 10 whose optical path has been established are connected.

In a case where there is a plurality of new subscriber devices, the subscriber device management control unit 83-1 does not transmit control signal light that gives an instruction to output main signal light to the other new subscriber devices until association between one new subscriber device and the port 41-1 included in the optical distribution unit 40 is completed. This makes it possible to perform control such that a plurality of new subscriber devices does not transmit main signal light at the same timing. Thus, only the main signal light transmitted from the new subscriber device serving as the transmission destination of the control signal light is newly detected in the optical distribution unit 40. By associating the detection result from the optical distribution unit 40 thus obtained with the new subscriber device serving as the transmission destination of the control signal light, to which port of the optical distribution unit 40 the new subscriber device is connected is identified.

The subscriber device management control unit 83-1 performs processing of establishing an optical path by switching a connection relationship of the optical distribution unit 40 such that communication can be performed between the identified port and the port to which the subscriber device 15 serving as the communication target is connected.

Further, the subscriber device management control unit 83-1 measures a round trip time (RTT) between the new subscriber device and the subscriber device management control unit 83-1 by transmitting and receiving the control signal light to and from the new subscriber device.

After photoelectrically converting the uplink control signal light transmitted from the subscriber device 10, the subscriber device management control unit 83-1 recognizes the subscriber device 10 serving as a transmission source of the received uplink control signal light by using an identifier included in the uplink control signal. Examples of the identifier include an ID given to the subscriber device 10 from the subscriber device management control unit 83-1 and a media access control (MAC) address of the subscriber device 10.

In a case where uplink control signal light is simultaneously transmitted from a plurality of subscriber devices 10, the uplink control signal light beams may collide with each other. Therefore, in order to implement exchange of control signal light between the subscriber device management control unit 83-1 and the plurality of subscriber devices 10, for example, a passive optical network (PON) method can be applied. Each subscriber device 10 outputs uplink control signal light including a control signal only in a period of time permitted by the subscriber device management control unit 83-1 and stops output of the uplink control signal light in the other periods of time. That is, the uplink control signal light is burst signal light.

The subscriber device management control unit 83-1 recognizes the RTT between each subscriber device 10 and the subscriber device management control unit 83-1. Therefore, the subscriber device management control unit 83-1 gives permission to transmit uplink control signal light to each subscriber device 10 with reference to an RTT value such that the uplink control signal light from the subscriber device 10, which is burst signal light, does not reach the subscriber device management control unit 83-1 in the same period of time as the uplink control signal light from the other subscriber devices 10.

With the above configuration, the subscriber device management control unit 83-1 exchanges information necessary for registration, authentication, and optical path establishment with the new subscriber device (for example, subscriber device 10-1) via the first optical multiplexing/demultiplexing unit 20 and the second optical multiplexing/demultiplexing unit 30. Further, the subscriber device management control unit 83-1 exchanges control information with the subscriber device 10 whose optical path is already established via the first optical multiplexing/demultiplexing unit 20 and the second optical multiplexing/demultiplexing unit 30.

The control unit 81-2 transmits downlink control signal light to the subscriber device 15. A wavelength of the downlink control signal light transmitted by the control unit 81-2 falls within a range of wavelengths transmitted from a port on the second optical multiplexing/demultiplexing unit 70 side to a port on the subscriber device 15 side among input/output ports of the first optical multiplexing/demultiplexing unit 60. The downlink control signal light is signal light obtained by time-multiplexing the downlink control signals addressed to the respective subscriber devices 15. After photoelectrically converting the downlink control signal light, each subscriber device 15 selectively receives the downlink control signal addressed to the own device from among the time-multiplexed downlink control signals by using an identifier included in the downlink control signal. Examples of the identifier include an ID given to the subscriber device 15 from a subscriber device management control unit 83-2 of the control unit 81-2 and a MAC address of the subscriber device 15. Functions of the control unit 81 may be implemented by one or more processors executing a program.

### (Flow of Optical Path Establishing Processing (Part 1) of Optical Communication System 1)

Fig. 2 is a sequence diagram showing a flow of optical path establishing processing (part 1) of the optical communication system 1 according to the first embodiment. In Fig. 2, description will be made on the assumption that the new subscriber device is the subscriber device 10-1.

A user connects the subscriber device 10-1 to the optical distribution unit 40-1 via the optical transmission line 85-1. Thus, the subscriber device 10-1 is connected to the optical distribution unit 40-1 via the optical transmission line 85-1 (step S101). The subscriber device management control unit 83-1 of the control unit 81-1 recognizes the subscriber device 10-1 newly connected to the optical distribution unit 40-1 (step S102).

The subscriber device management control unit 83-1 exchanges information necessary for optical path establishment with the subscriber device 10-1 (step S103). The subscriber device management control unit 83-1 measures the RTT between the subscriber device management control unit 83-1 and the subscriber device 10-1 while exchanging the information necessary for optical path establishment. The subscriber device management control unit 83-1 stores the measured RTT value in association with the identifier of the subscriber device 10-1.

The subscriber device management control unit 83-1 generates a control signal that gives an instruction to output main signal light (step S104). The subscriber device management control unit 83-1 converts the generated control signal into an optical signal and transmits the optical signal to the subscriber device 10-1 as downlink control signal light (step S105). The downlink control signal light transmitted from the subscriber device management control unit 83-1 is input to the second optical multiplexing/demultiplexing unit 30. The second optical multiplexing/demultiplexing unit 30 splits and outputs the input downlink control signal light. The downlink control signal light split by the second optical multiplexing/demultiplexing unit 30 is input to each first optical multiplexing/demultiplexing unit 20. Each first optical multiplexing/demultiplexing unit 20 outputs the input downlink control signal light to the connected subscriber device 10 via the optical transmission line 85. Thus, each subscriber device 10 receives the downlink control signal light that gives an instruction to output main signal light, which has been transmitted from the subscriber device management control unit 83-1.

In response to reception of the downlink control signal light transmitted from the subscriber device management control unit 83-1, the subscriber device 10-1 transmits main signal light with the wavelength that reaches the optical distribution unit 40-1 to the optical transmission line 85-1 (step S106). The subscriber device 10-1 transmits the main signal light with the wavelength that reaches the optical distribution unit 40-1 to the optical transmission line 85-1, for example, immediately after receiving the downlink control signal light or after a predetermined period elapses from the reception. The main signal light transmitted from the subscriber device 10-1 is input to the first optical multiplexing/demultiplexing unit 20-1 via the optical transmission line 85-1.

The first optical multiplexing/demultiplexing unit 20-1 outputs the input main signal light to the optical distribution unit 40-1. Because the wavelength of the main signal light transmitted by the subscriber device 10-1 falls within the range of wavelengths transmitted from the port on the subscriber device 10 side to the port on the optical distribution unit 40-1 side among the input/output ports of the first optical multiplexing/demultiplexing unit 20, the main signal light input to the first optical multiplexing/demultiplexing unit 20-1 is output to the optical distribution unit 40-1. The photodetection unit 43-1 of the optical distribution unit 40-1 detects the main signal light output from the first optical multiplexing/demultiplexing unit 20-1 (step S107). For example, the photodetection unit 43-1 detects the main signal light output from the first optical multiplexing/demultiplexing unit 20-1 at a port 41-1-1. The photodetection unit 43-1 transmits a detection result indicating that light has been detected at the port 41-1-1 to the control unit 81-1 (step S108).

The subscriber device management control unit 83-1 of the control unit 81-1 acquires the detection result transmitted from the photodetection unit 43-1. The subscriber device management control unit 83-1 recognizes a port to which the subscriber device 10-1 newly connected to the optical distribution unit 40-1 is connected on the basis of the acquired detection result (step S109). Specifically, the subscriber device management control unit 83-1 associates the port (for example, port 41-1-1) included in the detection result with the subscriber device 10-1 serving as a transmission destination of the downlink control signal light. Thus, the subscriber device management control unit 83-1 recognizes that the subscriber device 10-1 newly connected to the optical distribution unit 40-1 is connected to the port (for example, port 41-1-1) included in the detection result.

The optical distribution control units 82-1 and 82-2 set connection relationships between the ports of the optical distribution units 40-1 and 40-2 on the basis of the recognized port and information of the subscriber device 15 (for example, subscriber device 15-1) with which the subscriber device 10-1 performs communication (step S110). Specifically, the optical distribution control unit 82-1 sets a connection relationship of the optical distribution unit 40-1 so as to connect the port 41-1-1 to which the subscriber device 10-1 is connected and a port 42-1-2 connected to the optical distribution unit 40-2 to which the subscriber device 15-1 is connected. The optical distribution control unit 82-1 generates a control signal for connecting the port 41-1-1 and the port 42-1-2. The optical distribution control unit 82-1 transmits the generated control signal to the optical distribution unit 40-1 (step S111).

Similarly, the optical distribution control unit of the control unit 81-2 sets a connection relationship of the optical distribution unit 40-2 so as to connect the port to which the subscriber device 15-1 is connected and the port connected to the optical distribution unit 40-1 to which the subscriber device 10-1 is connected. The optical distribution control unit of the control unit 81-2 generates a control signal for connecting the port to which the subscriber device 15-1 is connected and the port connected to the optical distribution unit 40-1 to which the subscriber device 10-1 is connected. The optical distribution control unit of the control unit 81-2 transmits the generated control signal to the optical distribution unit 40-2.

The optical distribution units 40-1 and 40-2 set the connection relationships between the ports on the basis of the control signals transmitted from the management control device 80 (step S112). Thus, an optical path is established between the subscriber device 10-1 and the subscriber device 15-1. As a result, communication is enabled between the subscriber device 10-1 and the subscriber device 15-1.

Note that the subscriber device management control unit 83-1 may refer to the RTT value of the subscriber device 10 whose optical path has been established and give transmission permission to each subscriber device 10 whose optical path has been established such that main signal light is not transmitted from the other subscriber devices 10 in a period in which the main signal light transmitted by the subscriber device 10-1 in response to the downlink control signal light may reach the optical distribution unit 40-1. Here, the period in which the main signal light transmitted by the subscriber device 10-1 in response to the downlink control signal light may reach the optical distribution unit 40-1 is set in advance. In this method, the subscriber device management control unit 83-1 recognizes a port photodetected by the photodetection unit 43 as a port to which the new subscriber device is connected while photodetection is being stopped at the ports of the optical distribution unit 40 to which the subscriber devices 10 whose optical path has been established are connected. This makes it possible to avoid inputting, to the optical distribution unit 40-1, an optical signal other than the main signal light transmitted from the subscriber device 10-1. As a result, it is possible to avoid erroneous association in the subscriber device management control unit 83-1.

### (Flow of Optical Path Establishing Processing (Part 2) of Optical Communication System 1)

In Fig. 2, the flow of the optical path establishing processing in a case where one new subscriber device is provided has been described. Therefore, the flow of the optical path establishing processing in a case where a plurality of new subscriber devices is provided will be described with reference to Figs. 3 and 4. Figs. 3 and 4 are sequence diagrams showing a flow of the optical path establishing processing (part 2) of the optical communication system 1 according to the first embodiment. In Figs. 3 and 4, description will be made on the assumption that the new subscriber devices are the subscriber devices 10-1 and 10-2.

A first user connects the subscriber device 10-1 to the optical distribution unit 40-1 via the optical transmission line 85-1. Thus, the subscriber device 10-1 is connected to the optical distribution unit 40-1 via the optical transmission line 85-1 (step S201). A second user connects the subscriber device 10-2 to the optical distribution unit 40-1 via the optical transmission line 85-2. Thus, the subscriber device 10-2 is connected to the optical distribution unit 40-1 via the optical transmission line 85-2 (step S202).

The subscriber device management control unit 83-1 of the control unit 81-1 recognizes the subscriber devices 10-1 and 10-2 newly connected to the optical distribution unit 40-1 (step S203). The subscriber device management control unit 83-1 exchanges information necessary for optical path establishment with the subscriber device 10-1 (step S204). The subscriber device management control unit 83-1 measures the RTT between the subscriber device management control unit 83-1 and the subscriber device 10-1 while exchanging the information necessary for optical path establishment. The subscriber device management control unit 83-1 stores the measured RTT value in association with the identifier of the subscriber device 10-1.

Further, the subscriber device management control unit 83-1 exchanges information necessary for optical path establishment with the subscriber device 10-2 (step S205). The subscriber device management control unit 83-1 measures the RTT between the subscriber device management control unit 83-1 and the subscriber device 10-2 while exchanging the information necessary for optical path establishment. The subscriber device management control unit 83-1 stores the measured RTT value in association with the identifier of the subscriber device 10-2.

The subscriber device management control unit 83-1 generates a control signal that gives an instruction to output main signal light (step S206). The subscriber device management control unit 83-1 converts the generated control signal into an optical signal and transmits the optical signal to the subscriber device 10-1 as downlink control signal light (step S207). The downlink control signal light transmitted from the subscriber device management control unit 83-1 is input to the second optical multiplexing/demultiplexing unit 30. The second optical multiplexing/demultiplexing unit 30 splits and outputs the input downlink control signal light. The downlink control signal light split by the second optical multiplexing/demultiplexing unit 30 is input to each first optical multiplexing/demultiplexing unit 20. Each first optical multiplexing/demultiplexing unit 20 outputs the input downlink control signal light to the connected subscriber device 10 via the optical transmission line 85. Thus, each subscriber device 10 receives the downlink control signal light transmitted from the subscriber device management control unit 83-1.

In response to reception of the downlink control signal light transmitted from the subscriber device management control unit 83-1, the subscriber device 10-1 transmits main signal light with the wavelength that reaches the optical distribution unit 40-1 to the optical transmission line 85-1 (step S208). Here, the downlink control signal light transmitted from the subscriber device management control unit 83-1 is also received by the subscriber device 10-2. However, the control signal is not addressed to the subscriber device 10-2, and thus the subscriber device 10-2 discards the control signal included in the received downlink control signal light.

The subscriber device 10-1 transmits the main signal light with the wavelength that reaches the optical distribution unit 40-1 to the optical transmission line 85-1, for example, immediately after receiving the downlink control signal light or after a predetermined period elapses from the reception. The main signal light transmitted from the subscriber device 10-1 is input to the first optical multiplexing/demultiplexing unit 20-1 via the optical transmission line 85-1.

The first optical multiplexing/demultiplexing unit 20-1 outputs the input main signal light to the optical distribution unit 40-1. Because the wavelength of the main signal light transmitted by the subscriber device 10-1 falls within the range of wavelengths transmitted from the port on the subscriber device 10 side to the port on the optical distribution unit 40-1 side among the input/output ports of the first optical multiplexing/demultiplexing unit 20, the main signal light input to the first optical multiplexing/demultiplexing unit 20-1 is output to the optical distribution unit 40-1. The photodetection unit 43-1 of the optical distribution unit 40-1 detects the main signal light output from the first optical multiplexing/demultiplexing unit 20-1 (step S209). For example, the photodetection unit 43-1 detects the main signal light output from the first optical multiplexing/demultiplexing unit 20-1 at the port 41-1-1. The photodetection unit 43-1 transmits a detection result indicating that light has been detected at the port 41-1-1 to the control unit 81-1 (step S210).

The subscriber device management control unit 83-1 of the control unit 81-1 acquires the detection result transmitted from the photodetection unit 43-1. The subscriber device management control unit 83-1 recognizes a port to which the subscriber device 10-1 newly connected to the optical distribution unit 40-1 is connected on the basis of the acquired detection result (step S211). Specifically, the subscriber device management control unit 83-1 associates the port (for example, port 41-1-1) included in the detection result with the subscriber device 10-1 serving as the transmission destination of the downlink control signal light. Thus, the subscriber device management control unit 83-1 recognizes that the subscriber device 10-1 newly connected to the optical distribution unit 40-1 is connected to the port (for example, port 41-1-1) included in the detection result.

The optical distribution control units 82-1 and 82-2 set connection relationships between the ports of the optical distribution units 40-1 and 40-2 on the basis of the recognized port and information of the subscriber device 15 (for example, subscriber device 15-1) with which the subscriber device 10-1 performs communication (step S212). Specifically, the optical distribution control unit 82-1 sets a connection relationship of the optical distribution unit 40-1 so as to connect the port 41-1-1 to which the subscriber device 10-1 is connected and the port 42-1-2 connected to the optical distribution unit 40-2 to which the subscriber device 15-1 is connected. The optical distribution control unit 82-1 generates a control signal for connecting the port 41-1-1 and the port 42-1-2. The optical distribution control unit 82-1 transmits the generated control signal to the optical distribution unit 40-1 (step S213).

Similarly, the optical distribution control unit of the control unit 81-2 sets a connection relationship of the optical distribution unit 40-2 so as to connect the port to which the subscriber device 15-1 is connected and the port connected to the optical distribution unit 40-1 to which the subscriber device 10-1 is connected. The optical distribution control unit of the control unit 81-2 generates a control signal for connecting the port to which the subscriber device 15-1 is connected and the port connected to the optical distribution unit 40-1 to which the subscriber device 10-1 is connected. The optical distribution control unit of the control unit 81-2 transmits the generated control signal to the optical distribution unit 40-2.

The optical distribution units 40-1 and 40-2 set the connection relationships between the ports on the basis of the control signals transmitted from the management control device 80 (step S214). Thus, an optical path is established between the subscriber device 10-1 and the subscriber device 15-1. As a result, communication is enabled between the subscriber device 10-1 and the subscriber device 15-1.

Thereafter, the subscriber device management control unit 83-1 generates again a downlink control signal that gives an instruction to output main signal light (step S215). The subscriber device management control unit 83-1 converts the generated downlink control signal into an optical signal and transmits the optical signal to the subscriber device 10-2 as downlink control signal light (step S216). The downlink control signal light transmitted from the subscriber device management control unit 83-1 is input to the second optical multiplexing/demultiplexing unit 30. The second optical multiplexing/demultiplexing unit 30 splits and outputs the input downlink control signal light. The downlink control signal light split by the second optical multiplexing/demultiplexing unit 30 is input to each first optical multiplexing/demultiplexing unit 20. Each first optical multiplexing/demultiplexing unit 20 outputs the input downlink control signal light to the connected subscriber device 10 via the optical transmission line 85. Thus, each subscriber device 10 receives the downlink control signal light transmitted from the subscriber device management control unit 83-1.

In response to reception of the downlink control signal light transmitted from the subscriber device management control unit 83-1, the subscriber device 10-2 transmits main signal light with the wavelength that reaches the optical distribution unit 40-1 to the optical transmission line 85-2 (step S217). Here, the downlink control signal light transmitted from the subscriber device management control unit 83-1 is also received by the subscriber device 10-1. However, the control signal is not addressed to the subscriber device 10-1, and thus the subscriber device 10-1 discards the control signal included in the received control signal light.

The subscriber device 10-2 transmits the main signal light with the wavelength that reaches the optical distribution unit 40-1 to the optical transmission line 85-2, for example, immediately after receiving the downlink control signal light or after a predetermined period elapses from the reception. The main signal light transmitted from the subscriber device 10-2 is input to the first optical multiplexing/demultiplexing unit 20-2 via the optical transmission line 85-2.

The first optical multiplexing/demultiplexing unit 20-2 outputs the input main signal light to the optical distribution unit 40-1. Because the wavelength of the main signal light transmitted by the subscriber device 10-2 falls within the range of wavelengths transmitted from the port on the subscriber device 10 side to the port on the optical distribution unit 40-1 side among the input/output ports of the first optical multiplexing/demultiplexing unit 20, the main signal light input to the first optical multiplexing/demultiplexing unit 20-2 is output to the optical distribution unit 40-1. The photodetection unit 43-1 of the optical distribution unit 40-1 detects the main signal light output from the first optical multiplexing/demultiplexing unit 20-2 (step S218). For example, the photodetection unit 43-1 detects the main signal light output from the first optical multiplexing/demultiplexing unit 20-2 at a port 41-1-2. The photodetection unit 43-1 transmits a detection result indicating that light has been detected at the port 41-1-2 to the control unit 81-1 (step S219).

The subscriber device management control unit 83-1 of the control unit 81-1 acquires the detection result transmitted from the photodetection unit 43-1. The subscriber device management control unit 83-1 recognizes a port to which the subscriber device 10-2 newly connected to the optical distribution unit 40-1 is connected on the basis of the acquired detection result (step S220). Specifically, the subscriber device management control unit 83-1 associates the port (for example, port 41-1-2) included in the detection result with the subscriber device 10-2 serving as a transmission destination of the downlink control signal light. Thus, the subscriber device management control unit 83-1 recognizes that the subscriber device 10-2 newly connected to the optical distribution unit 40-1 is connected to the port (for example, port 41-1-2) included in the detection result.

The optical distribution control units 82-1 and 82-2 set connection relationships between the ports of the optical distribution units 40-1 and 40-2 on the basis of the recognized port and information of the subscriber device 15 (for example, subscriber device 15-2) with which the subscriber device 10-2 performs communication (step S221). Specifically, the optical distribution control unit 82-1 sets a connection relationship of the optical distribution unit 40-1 so as to connect the port 41-1-2 to which the subscriber device 10-2 is connected and a port 42-1-3 connected to the optical distribution unit 40-2 to which the subscriber device 15-2 is connected. The optical distribution control unit 82-1 generates a control signal for connecting the port 41-1-2 and the port 42-1-3. The optical distribution control unit 82-1 transmits the generated control signal to the optical distribution unit 40-1 (step S222).

Similarly, the optical distribution control unit of the control unit 81-2 sets a connection relationship of the optical distribution unit 40-2 so as to connect the port to which the subscriber device 15-2 is connected and the port connected to the optical distribution unit 40-1 to which the subscriber device 10-2 is connected. The optical distribution control unit of the control unit 81-2 generates a control signal for connecting the port to which the subscriber device 15-2 is connected and the port connected to the optical distribution unit 40-1 to which the subscriber device 10-2 is connected. The optical distribution control unit of the control unit 81-2 transmits the generated control signal to the optical distribution unit 40-2.

The optical distribution units 40-1 and 40-2 set the connection relationships between the ports on the basis of the control signals transmitted from the management control device 80 (step S223). Therefore, an optical path is established between the subscriber device 10-2 and the subscriber device 15-2. As a result, communication is enabled between the subscriber device 10-2 and the subscriber device 15-2.

In Figs. 3 and 4, the flow in which, after an optical path between one new subscriber device and the communication counterpart is established, the subscriber device management control unit 83-1 transmits downlink control signal light to another new subscriber device has been described. Here, the subscriber device management control unit 83-1 only needs to recognize a port to which the new subscriber device is connected, and thus the subscriber device management control unit 83-1 may execute the processing in step S215 after the processing in step S211 is completed. That is, the subscriber device management control unit 83-1 may transmit downlink control signal light that gives an instruction to output at least main signal light to the subscriber device 10-2 after recognizing the port to which the subscriber device 10-1 newly connected to the optical distribution unit 40-1 is connected. In this case, after recognizing the port to which each of the plurality of new subscriber devices is connected, the subscriber device management control unit 83-1 instructs the optical distribution control unit 82-1 to control the connection between the ports of the optical distribution unit 40. Note that, in the present specification, the subscriber device management control unit 83-1 may sequentially set the connection between the ports of the optical distribution unit 40 for each optical path.

Note that, in the processing of Figs. 3 and 4, the subscriber device management control unit 83-1 may refer to the RTT value of the subscriber device 10 whose optical path has been established and give transmission permission to each subscriber device 10 whose optical path has been established such that main signal light is not transmitted from the other subscriber devices 10 in a period in which the main signal light transmitted by the subscriber device 10-1 or 10-2 in response to the downlink control signal light may reach the optical distribution unit 40-1. This makes it possible to avoid inputting, to the optical distribution unit 40-1, an optical signal other than the main signal light transmitted from the subscriber device 10-1 or 10-2. As a result, it is possible to avoid erroneous association in the subscriber device management control unit 83-1.

### (Flow of Optical Path Establishing Processing (Part 3) of Optical Communication System 1)

In Figs. 3 and 4, there is a restriction that, in a case where a plurality of new subscriber devices is provided, downlink control signal light that gives an instruction to output at least main signal light is not transmitted to another new subscriber device until processing for one new subscriber device is completed. Meanwhile, it is possible to control a timing of transmission of main signal light from each new subscriber device without providing a restriction by further including information indicating the timing of transmission of main signal light in the downlink control signal light that gives an instruction to output main signal light.

The flow of the optical path establishing processing in such a configuration will be described with reference to Figs. 5 and 6. Figs. 5 and 6 are sequence diagrams showing a flow of the optical path establishing processing (part 3) of the optical communication system 1 according to the first embodiment. In Figs. 5 and 6, description will be made on the assumption that the new subscriber devices are the subscriber devices 10-1 and 10-2. In Figs. 5 and 6, similar processing steps to those in Figs. 3 and 4 will be denoted by the similar reference signs to those used in Figs. 3 and 4, and description thereof will be omitted.

When the processing from step S201 to step S205 is completed, the subscriber device management control unit 83-1 generates a control signal including information indicating a timing of transmission of main signal light from the subscriber device 10-1 and an instruction to output main signal light (step S301). The subscriber device management control unit 83-1 converts the generated control signal into an optical signal and transmits the optical signal to the subscriber device 10-1 as downlink control signal light (step S302). The downlink control signal light transmitted from the subscriber device management control unit 83-1 is input to the second optical multiplexing/demultiplexing unit 30. The second optical multiplexing/demultiplexing unit 30 splits and outputs the input downlink control signal light. The downlink control signal light split by the second optical multiplexing/demultiplexing unit 30 is input to each first optical multiplexing/demultiplexing unit 20.

Each first optical multiplexing/demultiplexing unit 20 outputs the input downlink control signal light to the connected subscriber device 10 via the optical transmission line 85. Thus, each subscriber device 10 receives the downlink control signal light transmitted from the subscriber device management control unit 83-1. The subscriber device 10-1 waits until the timing of transmission indicated by the control signal included in the downlink control signal light transmitted from the subscriber device management control unit 83-1. Here, the downlink control signal light transmitted from the subscriber device management control unit 83-1 in the processing of step S302 is also received by the subscriber device 10-2. However, the downlink control signal light is not addressed to the subscriber device 10-2, and thus the subscriber device 10-2 discards the control signal included in the received downlink control signal light.

After the processing in step S302, the subscriber device management control unit 83-1 generates a control signal including an instruction to output main signal light and information indicating a timing of transmission of main signal light from the subscriber device 10-2 (step S303). Here, the subscriber device management control unit 83-1 determines the timing of transmission such that the timing of transmission of main signal light from the subscriber device 10-1 does not overlap with the timing of transmission of main signal light from the subscriber device 10-2. The subscriber device management control unit 83-1 preferably determines the timing of transmission of main signal light from the subscriber device 10-2 such that the period in which the main signal light transmitted by the subscriber device 10-1 in response to the downlink control signal light may reach the optical distribution unit 40-1 does not overlap with a period in which the main signal light transmitted by the subscriber device 10-2 in response to the downlink control signal light may reach the optical distribution unit 40-1.

The subscriber device management control unit 83-1 converts the generated control signal into an optical signal and transmits the optical signal to the subscriber device 10-2 as downlink control signal light (step S304). The downlink control signal light transmitted from the subscriber device management control unit 83-1 is input to the second optical multiplexing/demultiplexing unit 30. The second optical multiplexing/demultiplexing unit 30 splits and outputs the input downlink control signal light. The downlink control signal light split by the second optical multiplexing/demultiplexing unit 30 is input to each first optical multiplexing/demultiplexing unit 20.

Each first optical multiplexing/demultiplexing unit 20 outputs the input downlink control signal light to the connected subscriber device 10 via the optical transmission line 85. Thus, each subscriber device 10 receives the downlink control signal light transmitted from the subscriber device management control unit 83-1. The subscriber device 10-2 waits until the timing of transmission indicated by the control signal included in the downlink control signal light transmitted from the subscriber device management control unit 83-1. Here, the downlink control signal light transmitted from the subscriber device management control unit 83-1 in the processing of step S304 is also received by the subscriber device 10-1. However, the downlink control signal light is not addressed to the subscriber device 10-1, and thus the subscriber device 10-1 discards the control signal included in the received downlink control signal light.

At the timing of transmission indicated by the control signal included in the received downlink control signal light, the subscriber device 10-1 transmits main signal light with the wavelength that reaches the optical distribution unit 40-1 to the optical transmission line 85-1 (step S305). The main signal light transmitted from the subscriber device 10-1 is input to the first optical multiplexing/demultiplexing unit 20-1 via the optical transmission line 85-1. The first optical multiplexing/demultiplexing unit 20-1 outputs the input main signal light to the optical distribution unit 40-1. Because the wavelength of the main signal light transmitted by the subscriber device 10-1 falls within the range of wavelengths transmitted from the port on the subscriber device 10-1 side to the port on the optical distribution unit 40-1 side among the input/output ports of the first optical multiplexing/demultiplexing unit 20-1, the main signal light input to the first optical multiplexing/demultiplexing unit 20-1 is output to the optical distribution unit 40-1. Thereafter, the processing from steps S209 to S214 is executed.

At the timing of transmission indicated by the control signal included in the received downlink control signal light, the subscriber device 10-2 transmits main signal light with the wavelength that reaches the optical distribution unit 40-1 to the optical transmission line 85-2 (step S306). The main signal light transmitted from the subscriber device 10-2 is input to the first optical multiplexing/demultiplexing unit 20-2 via the optical transmission line 85-2. The first optical multiplexing/demultiplexing unit 20-2 outputs the input main signal light to the optical distribution unit 40-1. Because the wavelength of the main signal light transmitted by the subscriber device 10-2 falls within the range of wavelengths transmitted from the port on the subscriber device 10-2 side to the port on the optical distribution unit 40-1 side among the input/output ports of the first optical multiplexing/demultiplexing unit 20-2, the main signal light input to the first optical multiplexing/demultiplexing unit 20-2 is output to the optical distribution unit 40-1. Thereafter, the processing from steps S218 to S223 is executed.

Note that, in the processing of Figs. 5 and 6, the subscriber device management control unit 83-1 may refer to the RTT value of the subscriber device 10 whose optical path has been established and give transmission permission to each subscriber device 10 whose optical path has been established such that main signal light is not transmitted from the other subscriber devices 10 in the period in which the main signal light transmitted by the subscriber device 10-1 or 10-2 in response to the downlink control signal light may reach the optical distribution unit 40-1. This makes it possible to avoid inputting, to the optical distribution unit 40-1, an optical signal other than the main signal light transmitted from the subscriber device 10-1 or 10-2. As a result, it is possible to avoid erroneous association in the subscriber device management control unit 83-1.

The optical communication system 1 configured as described above includes: the first optical multiplexing/demultiplexing unit 20 that splits and outputs uplink control signal light and main signal light transmitted at different wavelengths from one or more newly connected subscriber devices 10; the subscriber device management control unit 83 that transmits downlink control signal light that gives an instruction to output at least main signal light to the one or more newly connected subscriber devices 10 in response to the uplink control signal light split by the first optical multiplexing/demultiplexing unit 20; the optical distribution unit 40 that receives, from the port 41-1, input of the main signal light transmitted from the one or more newly connected subscriber devices 10 in response to the downlink control signal light and split by the first optical multiplexing/demultiplexing unit 20 and outputs the main signal light from the port 42-1; the photodetection unit 43 that detects the main signal light input to the port 41-1 included in the optical distribution unit 40; and the optical distribution control unit 82 that controls connection between the ports of the optical distribution unit 40 so as to connect the port 41-1 at which the main signal light has been detected by the photodetection unit 43 and a port to which a subscriber device serving as a communication counterpart of the one or more newly connected subscriber devices 10 is connected.

As described above, the subscriber device management control unit 83 transmits downlink control signal light that instructs a new subscriber device serving as a target to transmit main signal light to output at least main signal light. Then, the subscriber device management control unit 83 recognizes the port of the optical distribution unit 40 to which the new subscriber device that has transmitted the main signal light in response to the downlink control signal light is connected in accordance with the detection result of the photodetection unit 43. Thus, the control unit 81 can recognize to which port of the optical distribution unit 40 the new subscriber device is connected via the optical transmission line. As a result, the optical distribution control units 82-1 and 82-2 set connection between the ports of the optical distribution units 40-1 and 40-2 such that the main signal light transmitted from the new subscriber device is transferred to the subscriber device 15 serving as a communication counterpart. Thus, in the optical communication system including the optical multiplexing/demultiplexing unit between the optical distribution unit or the control unit and the subscriber device, it is possible to establish an optical route that communicably connects a newly connected subscriber device and a subscriber device serving as a communication counterpart.

Further, in the optical communication system 1, in a case where a plurality of new subscriber devices is provided, as a first method, downlink control signal light that gives an instruction to output main signal light is not transmitted to the other new subscriber devices until association between one new subscriber device among the plurality of new subscriber devices and the port 41-1 included in the optical distribution unit 40 is completed. In this method, in the optical communication system 1, the timing of transmission is controlled such that main signal light is not transmitted from the plurality of new subscriber devices at the same timing. This makes it possible to narrow transmission sources of the main signal light detected by the photodetection unit 43 to one new subscriber device serving as a transmission destination of the downlink control signal light. As a result, the control unit 81 can recognize to which port of the optical distribution unit 40 each of the plurality of new subscriber devices is connected via the optical transmission line. Therefore, in the optical communication system including the optical multiplexing/demultiplexing unit between the optical distribution unit or the control unit and the subscriber device, it is possible to establish an optical route that communicably connects a newly connected subscriber device and a subscriber device serving as a communication counterpart.

Further, in the optical communication system 1, in a case where a plurality of new subscriber devices is provided, as a second method, the timing of transmission of main signal light is issued as a notification to each of the plurality of new subscriber devices. In this method, in the optical communication system 1, the timing of transmission is controlled such that main signal light is not transmitted from the plurality of new subscriber devices at the same timing. This makes it possible to narrow transmission sources of the main signal light detected by the photodetection unit 43 to one new subscriber device serving as a transmission destination of the downlink control signal light. As a result, the control unit 81 can recognize to which port of the optical distribution unit 40 each of the plurality of new subscriber devices is connected via the optical transmission line. Therefore, in the optical communication system including the optical multiplexing/demultiplexing unit between the optical distribution unit or the control unit and the subscriber device, it is possible to establish an optical route that communicably connects a newly connected subscriber device and a subscriber device serving as a communication counterpart.

### (First Modification of First Embodiment)

Fig. 7 shows a configuration example of an optical communication system 1a according to a first modification of the first embodiment. The optical communication system 1a includes the plurality of subscriber devices 10 (for example, subscriber devices 10-1 to 10-3), the plurality of subscriber devices 15 (for example, subscriber devices 15-1 to 15-3), the plurality of first optical multiplexing/demultiplexing units 20 (for example, first optical multiplexing/demultiplexing units 20-1 to 20-3), the second optical multiplexing/demultiplexing unit 30, the plurality of optical distribution units 40 (for example, optical distribution units 40-1 to 40-2), the plurality of first optical multiplexing/demultiplexing units 60 (for example, first optical multiplexing/demultiplexing units 60-1 to 60-3), the second optical multiplexing/demultiplexing unit 70, and the management control device 80. The optical communication system 1a is different from the optical communication system 1 in that the wavelength multiplexing/demultiplexing units 50 are not provided. Hereinafter, differences from the optical communication system 1 will be described.

In the configuration shown in Fig. 7, each of the optical distribution units 40 has a function capable of setting a transmission path for each wavelength. For example, a WSS can be used as the optical distribution unit 40. This makes it possible to eliminate the necessity of the wavelength multiplexing/demultiplexing units 50. Further, in the configuration of Fig. 7, a multicast switch can also be used as the optical distribution unit 40.

In the configurations shown in Figs. 1 and 7, main signal light transmitted from the subscriber device 10 to the subscriber device 15 and main signal light transmitted from the subscriber device 15 to the subscriber device 10 flow through a core wire of the same optical transmission line. Meanwhile, there may be a section in which the main signal light transmitted from the subscriber device 10 to the subscriber device 15 and the main signal light transmitted from the subscriber device 15 to the subscriber device 10 flow through core wires of different optical transmission lines. In a case where there is a section in which signal light in different directions flows through the core wire of the same optical transmission line, the subscriber device management control unit 83-1 sets wavelengths of the signal light in the different directions to different wavelengths or gives transmission permission to the signal light in the different directions at different timings in order to prevent reception characteristics of signal light in opposite directions from deteriorating due to reflection in the optical transmission line. In a case where there is no section in which the signal light in the different directions flows through the core wire of the same optical transmission line, the wavelengths of the signal light in the different directions can be set to the same wavelength.

### (Second Modification of First Embodiment)

In the optical communication system 1, the first optical multiplexing/demultiplexing units 20, the second optical multiplexing/demultiplexing unit 30, the optical distribution unit 40-1, the wavelength multiplexing/demultiplexing unit 50-1, and the control unit 81-1 may be configured as an optical communication device. Similarly, the first optical multiplexing/demultiplexing units 60, the second optical multiplexing/demultiplexing unit 70, the optical distribution unit 40-2, the wavelength multiplexing/demultiplexing unit 50-2, and the control unit 81-2 may be configured as an optical communication device.

In the optical communication system 1a, the first optical multiplexing/demultiplexing units 20, the second optical multiplexing/demultiplexing unit 30, the optical distribution unit 40-1, and the control unit 81-1 may be configured as an optical communication device. Similarly, the first optical multiplexing/demultiplexing units 60, the second optical multiplexing/demultiplexing unit 70, the optical distribution unit 40-2, and the control unit 81-2 may be configured as an optical communication device.

### (Third Modification of First Embodiment)

The above-described embodiment shows the configuration in which the photodetection unit 43 is provided inside the optical distribution unit 40, but the photodetection unit 43 may be provided outside the optical distribution unit 40. In such a configuration, the optical distribution unit 40-1 does not include the photodetection unit 43-1. Further, the photodetection unit 43-1 is connected to the port 42-1-1 of the optical distribution unit 40-1. Note that the port to which the photodetection unit 43-1 is connected may be any one of the ports 42-1. Note that the optical distribution unit 40-2 is similar to the optical distribution unit 40-1.

The optical distribution unit 40-1 switches the connection relationship between the ports such that each port 41-1 for which an optical path is not established and the port 42-1-1 to which the photodetection unit 43-1 is connected are sequentially connected under the control of the optical distribution control unit 82-1. The photodetection unit 43-1 detects an optical signal output from the connected port 42-1-1. In a case of detecting the optical signal, the photodetection unit 43-1 notifies the management control device 80 of a detection result indicating that the optical signal has been detected.

The configuration and processing of the management control device 80 are basically similar to those of the above-described embodiment. For example, after downlink control signal light that gives an instruction to output main signal light is transmitted, for example, the optical distribution control unit 82-1 of the management control device 80 controls the connection relationship between the ports of the optical distribution unit 40-1 such that, among the ports 41-1 of the optical distribution unit 40-1, each port 41-1 for which an optical path is not established and the port 42-1-1 to which the photodetection unit 43-1 is connected are sequentially connected.

When acquiring a detection result from the photodetection unit 43-1, the subscriber device management control unit 83-1 recognizes the port 41-1 connected to the port 42-1-1 to which the photodetection unit 43-1 is connected as a port to which the newly connected subscriber device 10 is connected at the time of acquiring the detection result.

With the above configuration, it is possible to obtain an effect similar to that of the above-described embodiment even in a case where the photodetection unit 43 is provided outside the optical distribution unit 40.

### (Second Embodiment)

In a second embodiment, there will be described a configuration in which one subscriber device 10 includes a plurality of ports and transmits and receives main signal light at each port.

Fig. 8 shows a configuration example of an optical communication system 1b according to the second embodiment. The optical communication system 1b includes one or more subscriber devices 10b, the plurality of subscriber devices 15 (for example, subscriber devices 15-1 to 15-3), the plurality of first optical multiplexing/demultiplexing units 20 (for example, first optical multiplexing/demultiplexing units 20-1 to 20-3), the second optical multiplexing/demultiplexing unit 30, the plurality of optical distribution units 40 (for example, optical distribution units 40-1 to 40-2), the plurality of wavelength multiplexing/demultiplexing units 50 (for example, wavelength multiplexing/demultiplexing units 50-1 to 50-2), the plurality of first optical multiplexing/demultiplexing units 60 (for example, first optical multiplexing/demultiplexing units 60-1 to 60-3), the second optical multiplexing/demultiplexing unit 70, and the management control device 80.

The optical communication system 1b is different from the optical communication system 1 in that the subscriber device 10b is provided instead of the subscriber device 10. The other configurations of the optical communication system 1b are basically similar to those of the optical communication system 1. Hereinafter, differences from the optical communication system 1 will be mainly described.

The subscriber device 10b includes a plurality of ports 11-1 to 11-3 and one or more optical transceivers. Note that the subscriber device 10b only needs to include two or more ports 11. One optical transceiver is provided for one port 11. The optical transceiver is, for example, a coherent transceiver. The subscriber device 10 transmits and receives an optical signal such as a main signal and a control signal by using the optical transceiver.

The subscriber device 10b transmits and receives main signal light at different wavelengths via each port 11. The optical transmission line 85-1 is connected to a port 11-1, the optical transmission line 85-2 is connected to a port 11-2, and an optical transmission line 85-3 is connected to a port 11-3. The subscriber device 10b transmits and receives control signal light to and from the management control device 80 via any one of the plurality of ports 11. In this case, the subscriber device 10b uses a port identifier for identifying each port 11 in addition to an identifier of the subscriber device 10b.

The subscriber device 10b whose optical path is not yet established transmits light with the wavelength that reaches the optical distribution unit 40-1 via a specific port 11 in response to an instruction from the management control device 80. The subscriber device 10b whose optical path is not yet established transmits the light with the wavelength that reaches the optical distribution unit 40-1 after receiving, for example, downlink control signal light that gives an instruction to output main signal light from the management control device 80.

A specific processing flow in the second embodiment will be described. The user connects each of the ports 11-1 to 11-3 of the subscriber device 10b to the optical distribution unit 40-1 via the optical transmission lines 85-1 to 85-3. Thus, the subscriber device 10b is connected to the optical distribution unit 40-1 via the optical transmission lines 85-1 to 85-3. The subscriber device management control unit 83-1 of the control unit 81-1 recognizes the subscriber device 10b newly connected to the optical distribution unit 40-1. The subscriber device management control unit 83-1 exchanges information necessary for optical path establishment with the subscriber device 10b. At this time, the subscriber device 10b transmits uplink control signal light including the identifier of the subscriber device 10b and the port identifier of each port 11 to the subscriber device management control unit 83-1. Thus, the subscriber device management control unit 83-1 can recognize each port 11 included in the subscriber device 10b.

Further, when allocating a wavelength to the subscriber device 10b, the subscriber device management control unit 83-1 allocates the wavelength to each port 11. The subscriber device management control unit 83-1 notifies the subscriber device 10b of information regarding the wavelength allocated to each port 11 while exchanging the information necessary for optical path establishment.

The subscriber device management control unit 83-1 generates a control signal including an instruction to output main signal light and the port identifier of the port 11. The subscriber device management control unit 83-1 converts the generated control signal into an optical signal and transmits the optical signal to the subscriber device 10b as downlink control signal light. The downlink control signal light transmitted from the subscriber device management control unit 83-1 is input to the second optical multiplexing/demultiplexing unit 30. The second optical multiplexing/demultiplexing unit 30 splits and outputs the input downlink control signal light. The downlink control signal light split by the second optical multiplexing/demultiplexing unit 30 is input to each first optical multiplexing/demultiplexing unit 20. Each first optical multiplexing/demultiplexing unit 20 outputs the input downlink control signal light to the connected subscriber device 10b via the optical transmission line 85. Thus, the subscriber device 10b receives the downlink control signal light transmitted from the subscriber device management control unit 83-1.

In response to reception of the downlink control signal light transmitted from the subscriber device management control unit 83-1, the subscriber device 10b transmits, to the optical transmission line 85, main signal light with the wavelength that reaches the optical distribution unit 40-1 via the port 11 identified by the port identifier included in the downlink control signal light. For example, in a case where the port 11 identified by the port identifier is the port 11-1, the subscriber device 10b transmits the main signal light with the wavelength that reaches the optical distribution unit 40-1 to the optical transmission line 85-1 via the port 11-1. Here, description will be made on the assumption that the port 11 identified by the port identifier is the port 11-1.

The subscriber device 10b transmits the main signal light with the wavelength that reaches the optical distribution unit 40-1 to the optical transmission line 85-1 via the port 11-1, for example, immediately after receiving the downlink control signal light or after a predetermined period elapses from the reception. The main signal light transmitted from the subscriber device 10b is input to the first optical multiplexing/demultiplexing unit 20-1 via the optical transmission line 85-1.

The first optical multiplexing/demultiplexing unit 20-1 outputs the input main signal light to the optical distribution unit 40-1. Because the wavelength of the main signal light transmitted by the subscriber device 10b falls within the range of wavelengths transmitted from the port on the subscriber device 10 side to the port on the optical distribution unit 40-1 side among the input/output ports of the first optical multiplexing/demultiplexing unit 20-1, the main signal light input to the first optical multiplexing/demultiplexing unit 20-1 is output to the optical distribution unit 40-1. The photodetection unit 43-1 of the optical distribution unit 40-1 detects the main signal light output from the first optical multiplexing/demultiplexing unit 20-1. For example, the photodetection unit 43-1 detects the main signal light output from the first optical multiplexing/demultiplexing unit 20-1 at the port 41-1-1. The photodetection unit 43-1 transmits a detection result indicating that light has been detected at the port 41-1-1 to the control unit 81-1.

The subscriber device management control unit 83-1 of the control unit 81-1 acquires the detection result transmitted from the photodetection unit 43-1. The subscriber device management control unit 83-1 recognizes a port to which the subscriber device 10b newly connected to the optical distribution unit 40-1 is connected on the basis of the acquired detection result. Specifically, the subscriber device management control unit 83-1 associates the port (for example, port 41-1-1) included in the detection result with the port 11-1 of the subscriber device 10b serving as a transmission destination of the downlink control signal light. Thus, the subscriber device management control unit 83-1 recognizes that the port 11-1 of the subscriber device 10b newly connected to the optical distribution unit 40-1 is connected to the port (for example, port 41-1-1) included in the detection result.

The optical distribution control units 82-1 and 82-2 set connection relationships between the ports of the optical distribution units 40-1 and 40-2 on the basis of the recognized port and information of the subscriber device 15 (for example, subscriber device 15-1) with which the subscriber device 10b performs communication. Specifically, the optical distribution control unit 82-1 sets a connection relationship of the optical distribution unit 40-1 so as to connect the port 41-1-1 to which the port 11-1 of the subscriber device 10b is connected and the port 42-1-2 connected to the optical distribution unit 40-2 to which the subscriber device 15-1 is connected. The optical distribution control unit 82-1 generates a control signal for connecting the port 41-1-1 and the port 42-1-2. The optical distribution control unit 82-1 transmits the generated control signal to the optical distribution unit 40-1.

Similarly, the optical distribution control unit of the control unit 81-2 sets a connection relationship of the optical distribution unit 40-2 so as to connect the port to which the subscriber device 15-1 is connected and the port connected to the optical distribution unit 40-1 to which the port 11-1 of the subscriber device 10b is connected. The optical distribution control unit of the control unit 81-2 generates a control signal for connecting the port to which the subscriber device 15-1 is connected and the port connected to the optical distribution unit 40-1 to which the port 11-1 of the subscriber device 10b is connected. The optical distribution control unit of the control unit 81-2 transmits the generated control signal to the optical distribution unit 40-2.

The optical distribution units 40-1 and 40-2 set the connection relationships between the ports on the basis of the control signals transmitted from the management control device 80. Thus, an optical path is established between the port 11-1 of the subscriber device 10b and the subscriber device 15-1. As a result, communication is enabled between the subscriber device 10b and the subscriber device 15-1.

Thereafter, the subscriber device management control unit 83-1 generates a control signal including an instruction to output main signal light and the port identifier of the port 11. The subscriber device management control unit 83-1 converts the generated control signal into an optical signal and transmits the optical signal to the subscriber device 10b as downlink control signal light. The downlink control signal light transmitted from the subscriber device management control unit 83-1 is input to the second optical multiplexing/demultiplexing unit 30. The second optical multiplexing/demultiplexing unit 30 splits and outputs the input downlink control signal light. The downlink control signal light split by the second optical multiplexing/demultiplexing unit 30 is input to each first optical multiplexing/demultiplexing unit 20. Each first optical multiplexing/demultiplexing unit 20 outputs the input downlink control signal light to the connected subscriber device 10b via the optical transmission line 85. Thus, the subscriber device 10b receives the downlink control signal light transmitted from the subscriber device management control unit 83-1.

In response to reception of the downlink control signal light transmitted from the subscriber device management control unit 83-1, the subscriber device 10b transmits, to the optical transmission line 85, main signal light with the wavelength that reaches the optical distribution unit 40-1 via the port 11 identified by the port identifier included in the downlink control signal light. For example, in a case where the port 11 identified by the port identifier is the port 11-2, the subscriber device 10b transmits the main signal light with the wavelength that reaches the optical distribution unit 40-1 to the optical transmission line 85-2 via the port 11-2. Here, description will be made on the assumption that the port 11 identified by the port identifier is the port 11-2.

The subscriber device 10b transmits the main signal light with the wavelength that reaches the optical distribution unit 40-1 to the optical transmission line 85-2 via the port 11-2, for example, immediately after receiving the downlink control signal light or after a predetermined period elapses from the reception. The main signal light transmitted from the subscriber device 10b is input to the first optical multiplexing/demultiplexing unit 20-2 via the optical transmission line 85-2.

The first optical multiplexing/demultiplexing unit 20-2 outputs the input main signal light to the optical distribution unit 40-1. Because the wavelength of the main signal light transmitted by the subscriber device 10b falls within the range of wavelengths transmitted from the port on the subscriber device 10 side to the port on the optical distribution unit 40-1 side among the input/output ports of the first optical multiplexing/demultiplexing unit 20-2, the main signal light input to the first optical multiplexing/demultiplexing unit 20-2 is output to the optical distribution unit 40-1. The photodetection unit 43-1 of the optical distribution unit 40-1 detects the main signal light output from the first optical multiplexing/demultiplexing unit 20-2. For example, the photodetection unit 43-1 detects the main signal light output from the first optical multiplexing/demultiplexing unit 20-2 at the port 41-1-2. The photodetection unit 43-1 transmits a detection result indicating that light has been detected at the port 41-1-2 to the control unit 81-1.

The subscriber device management control unit 83-1 of the control unit 81-1 acquires the detection result transmitted from the photodetection unit 43-1. The subscriber device management control unit 83-1 recognizes a port to which the subscriber device 10b newly connected to the optical distribution unit 40-1 is connected on the basis of the acquired detection result. Specifically, the subscriber device management control unit 83-1 associates the port (for example, port 41-1-2) included in the detection result with the port 11-2 of the subscriber device 10b serving as a transmission destination of the downlink control signal light. Thus, the subscriber device management control unit 83-1 recognizes that the port 11-2 of the subscriber device 10b newly connected to the optical distribution unit 40-1 is connected to the port (for example, port 41-1-2) included in the detection result.

The optical distribution control units 82-1 and 82-2 set connection relationships between the ports of the optical distribution units 40-1 and 40-2 on the basis of the recognized port and information of the subscriber device 15 (for example, subscriber device 15-2) with which the subscriber device 10b performs communication. Specifically, the optical distribution control unit 82-1 sets a connection relationship of the optical distribution unit 40-1 so as to connect the port 41-1-2 to which the port 11-2 of the subscriber device 10b is connected and the port 42-1-3 connected to the optical distribution unit 40-2 to which the subscriber device 15-2 is connected. The optical distribution control unit 82-1 generates a control signal for connecting the port 41-1-2 and the port 42-1-3. The optical distribution control unit 82-1 transmits the generated control signal to the optical distribution unit 40-1.

Similarly, the optical distribution control unit of the control unit 81-2 sets a connection relationship of the optical distribution unit 40-2 so as to connect the port to which the subscriber device 15-2 is connected and the port connected to the optical distribution unit 40-1 to which the port 11-2 of the subscriber device 10b is connected. The optical distribution control unit of the control unit 81-2 generates a control signal for connecting the port to which the subscriber device 15-2 is connected and the port connected to the optical distribution unit 40-1 to which the port 11-2 of the subscriber device 10b is connected. The optical distribution control unit of the control unit 81-2 transmits the generated control signal to the optical distribution unit 40-2.

The optical distribution units 40-1 and 40-2 set the connection relationships between the ports on the basis of the control signals transmitted from the management control device 80. Thus, an optical path is established between the port 11-2 of the subscriber device 10b and the subscriber device 15-2. As a result, communication is enabled between the subscriber device 10b and the subscriber device 15-2.

According to the second embodiment configured as described above, as in the first embodiment, the control unit 81 can recognize to which port of the optical distribution unit 40 the new subscriber device is connected via the optical transmission line even in a case where one subscriber device 10b includes the plurality of ports 11. As a result, the optical distribution control units 82-1 and 82-2 set connection between the ports of the optical distribution units 40-1 and 40-2 such that the main signal light transmitted from the new subscriber device is transferred to the subscriber device 15 serving as a communication counterpart. Thus, in the optical communication system including the optical multiplexing/demultiplexing unit between the optical distribution unit or the control unit and the subscriber device, it is possible to establish an optical route that communicably connects a newly connected subscriber device and a subscriber device serving as a communication counterpart.

### (First Modification of Second Embodiment)

The optical communication system 1b may be configured to control a timing of transmission of main signal light from each new subscriber device without providing a restriction by further including information indicating the timing of transmission of main signal light in the downlink control signal light that gives an instruction to output main signal light. Specific processing is similar to that in Figs. 5 and 6 and is different in that, instead of a plurality of new subscriber devices, one new subscriber device includes a plurality of ports 11. Therefore, it is only necessary to replace the plurality of new subscriber devices with the plurality of ports 11.

### (Second Modification of Second Embodiment)

In the optical communication system 1b, the first optical multiplexing/demultiplexing units 20, the second optical multiplexing/demultiplexing unit 30, the optical distribution unit 40-1, the wavelength multiplexing/demultiplexing unit 50-1, and the control unit 81-1 may be configured as an optical communication device. Similarly, the first optical multiplexing/demultiplexing units 60, the second optical multiplexing/demultiplexing unit 70, the optical distribution unit 40-2, the wavelength multiplexing/demultiplexing unit 50-2, and the control unit 81-2 may be configured as an optical communication device.

### (Third Modification of Second Embodiment)

The above-described embodiment shows the configuration in which the photodetection unit 43 is provided inside the optical distribution unit 40, but the photodetection unit 43 may be provided outside the optical distribution unit 40. Specific processing is as described in the first embodiment.

### (First Modification Common to First and Second Embodiments)

The first embodiment and the second embodiment may be configured in combination. In such a configuration, the optical communication system includes the subscriber device 10 shown in Fig. 1 and the like and the subscriber device 10b including the plurality of ports 11.

### (Second Modification Common to First and Second Embodiments)

In each of the above-described embodiments, in a case where main signal light is output from the subscriber device 10 whose optical path has already been established at the time of connecting a new subscriber device, the subscriber device management control unit 83-1 may generate a control signal including not only an instruction to output main signal light but also an instruction to increase or decrease power of the main signal light or an instruction to change a wavelength thereof. The instruction to increase or decrease the power of the main signal light is an instruction for increasing or decreasing the power of the main signal light output by the new subscriber device.

### (Third Embodiment)

In a third embodiment, there will be described a configuration that recognizes to which port of the optical distribution unit 40 a new subscriber device is connected via an optical transmission line in a configuration in which a subscriber device management control unit of a management control device includes a plurality of control ports.

Fig. 9 shows a configuration example of an optical communication system 1c according to the third embodiment. The optical communication system 1c includes the plurality of subscriber devices 10 (for example, subscriber devices 10-1 to 10-3), the plurality of subscriber devices 15 (for example, subscriber devices 15-1 to 15-3), the plurality of first optical multiplexing/demultiplexing units 20 (for example, first optical multiplexing/demultiplexing units 20-1 to 20-3), the plurality of optical distribution units 40 (for example, optical distribution units 40-1 to 40-2), the plurality of wavelength multiplexing/demultiplexing units 50 (for example, wavelength multiplexing/demultiplexing units 50-1 to 50-2), the plurality of first optical multiplexing/demultiplexing units 60 (for example, first optical multiplexing/demultiplexing units 60-1 to 60-3), and a management control device 80c. In the third embodiment, an example where the subscriber device 10 transmits an optical signal and the subscriber device 15 receives the optical signal transmitted from the subscriber device 10 will be described.

In the following description, a direction from the subscriber devices 10 and 15 toward the management control device 80c is referred to as an uplink direction, and a direction from the management control device 80c toward the subscriber devices 10 and 15 is referred to as a downlink direction. The numbers of the subscriber devices 10, the subscriber devices 15, the first optical multiplexing/demultiplexing units 20 and 60, the optical distribution units 40, and the wavelength multiplexing/demultiplexing units 50 included in the optical communication system 1c are not limited to the numbers shown in Fig. 9.

Connection is made by using optical transmission lines between the subscriber devices 10 and the first optical multiplexing/demultiplexing units 20, between the first optical multiplexing/demultiplexing units 20 and the management control device 80c, between the first optical multiplexing/demultiplexing units 20 and the optical distribution unit 40-1, between the optical distribution unit 40-1 and the wavelength multiplexing/demultiplexing unit 50-1, between the wavelength multiplexing/demultiplexing unit 50-1 and the wavelength multiplexing/demultiplexing unit 50-2, between the wavelength multiplexing/demultiplexing unit 50-2 and the optical distribution unit 40-2, between the optical distribution unit 40-2 and the first optical multiplexing/demultiplexing units 60, between the first optical multiplexing/demultiplexing units 60 and the subscriber devices 15, and between the first optical multiplexing/demultiplexing units 60 and the management control device 80c. The optical transmission lines are, for example, optical fibers. An optical communication NW 75 is configured between the wavelength multiplexing/demultiplexing unit 50-1 and the wavelength multiplexing/demultiplexing unit 50-2.

The optical communication system 1c is different from the optical communication system 1 in that the management control device 80c is provided instead of the management control device 80. The other configurations of the optical communication system 1c are similar to those of the optical communication system 1. Hereinafter, differences from the optical communication system 1 will be mainly described.

The management control device 80c controls at least the subscriber devices 10 and 15 and the optical distribution units 40. The management control device 80c includes a plurality of control units 81c (for example, control units 81c-1 to 81c-2). The control units 81c control the respective optical distribution units 40 and the subscriber devices 10 and 15 accommodated in the respective optical distribution units 40. For example, the control unit 81c-1 controls the optical distribution unit 40-1 and the subscriber devices 10 accommodated in the optical distribution unit 40-1. For example, the control unit 81c-2 controls the optical distribution unit 40-2 and the subscriber devices 15 accommodated in the optical distribution unit 40-2.

The control unit 81c-1 includes the optical distribution control unit 82-1 and a subscriber device management control unit 83c-1. The control unit 81c-2 includes the optical distribution control unit 82-2 and a subscriber device management control unit 83c-2.

The optical distribution control unit 82-1 performs a route setting of an optical path by setting and switching connection between the ports of the optical distribution unit 40-1. The optical distribution control unit 82-1 controls the connection between the ports of the optical distribution unit 40-1 so as to connect, for example, a port 41-1-p (1 ≤ p ≤ P) at which main signal light has been detected by the photodetection unit 43-1 and a port 42-1-q (1 ≤ q ≤ Q) to which the subscriber device 15 serving as a communication counterpart of the new subscriber device is connected.

In the present embodiment, the optical distribution control unit 82-1 recognizes the port 41-1-p of the optical distribution unit 40-1 to which the new subscriber device is connected on the basis of a result of association by the subscriber device management control unit 83c-1. Then, the optical distribution control unit 82-1 controls the connection between the ports of the optical distribution unit 40-1 so as to connect the recognized port 41-1-p and the port 42-1-q (1 ≤ q ≤ Q) to which the subscriber device 15 serving as a communication counterpart of the new subscriber device is connected.

The subscriber device management control unit 83c-1 includes a plurality of control ports 84-1. In Fig. 9, an example where the subscriber device management control unit 83c-1 includes three control ports 84-1-1 to 84-1-3 will be described, but the number of control ports 84-1 included in the subscriber device management control unit 83c-1 is not particularly limited. Different first optical multiplexing/demultiplexing units 20 are connected to the respective control ports 84-1 included in the subscriber device management control unit 83c-1. In the example shown in Fig. 9, the control port 84-1-1 is connected to the first optical multiplexing/demultiplexing unit 20-1 via the optical transmission line, the control port 84-1-2 is connected to the first optical multiplexing/demultiplexing unit 20-2 via the optical transmission line, and the control port 84-1-3 is connected to the first optical multiplexing/demultiplexing unit 20-3 via the optical transmission line.

In a case where a new subscriber device is connected to the optical distribution unit 40-1, uplink control signal light transmitted from the new subscriber device is input to any one of the control ports 84-1 included in the subscriber device management control unit 83c-1. The subscriber device management control unit 83c-1 performs new subscriber device connection port identification processing on the basis of the uplink control signal light input to any one of the control ports 84-1 included in the subscriber device management control unit 83c-1.

The new subscriber device connection port identification processing performed by the subscriber device management control unit 83c-1 is processing for identifying the port 41-1 of the optical distribution unit 40-1 to which the new subscriber device is connected. The new subscriber device connection port identification processing is performed by the following six steps.

### (First Step)

The control port 84-1 linked up by input of uplink control signal light is detected.

### (Second Step)

A new subscriber device is recognized by exchanging control signal light including information necessary for authentication, registration, and optical path establishment with the new subscriber device.

### (Third Step)

The recognized new subscriber device is associated with the control port 84-1 that has detected the input of the uplink control signal light.

### (Fourth Step)

Downlink control signal light including an instruction to output main signal light is transmitted to the recognized new subscriber device.

### (Fifth Step)

Information of the port 41-1 of the optical distribution unit 40-1 at which input of an optical signal has been detected by the photodetection unit 43-1 is acquired.

### (Sixth Step)

The recognized new subscriber device is associated with the detected port 41-1 of the optical distribution unit 40-1.

By using the result of the new subscriber device connection port identification processing, the optical distribution control unit 82-1 can set the connection between the ports of the optical distribution unit 40-1 such that main signal light transmitted by the new subscriber device is transferred to the subscriber device serving as a communication counterpart. Specifically, the optical distribution control unit 82-1 sets the connection between the ports of the optical distribution unit 40-1 such that, among the ports on the optical distribution unit 40-1 side of the wavelength multiplexing/demultiplexing unit 50-1 connected to a path through which wavelengthmultiplexed signal light is transmitted to a route allocated to an optical path to be newly established, the optical distribution unit 40-1 outputs the main signal light transmitted from the new subscriber device to a port that can transfer light with a wavelength allocated to the optical path to be newly established to the path.

By using the result of the new subscriber device connection port identification processing, the subscriber device management control unit 83c-1 can transmit the downlink control signal light addressed to the new subscriber device only from the control port 84-1 connected to the new subscriber device via the optical transmission line and the first optical multiplexing/demultiplexing unit 20. As a result, it is unnecessary to broadcast the downlink control signal light addressed to all the subscriber devices 10 monitored and controlled by the control unit 81c-1 from all the control ports 84-1. This makes it possible to avoid an increase in a signal band of the downlink control signal light.

Further, the subscriber device management control unit 83c-1 can also measure the round trip time between the new subscriber device and the subscriber device management control unit 83c-1 by transmitting and receiving control signal light to and from the new subscriber device.

The control unit 81c-2 performs processing similar to that of the control unit 81c-1. The optical distribution control unit 82-2 included in the control unit 81c-2 performs a route setting of an optical path by setting and switching connection between the ports of the optical distribution unit 40-2. The optical distribution control unit 82-2 controls the connection between the ports of the optical distribution unit 40-2 so as to connect, for example, a port to which the subscriber device 15 is connected and a port to which the subscriber device 10 serving as a communication counterpart of the subscriber device 15 is connected.

The subscriber device management control unit 83c-2 includes a plurality of control ports 84-2. **In** Fig. 9, an example where the subscriber device management control unit 83c-2 includes three control ports 84-2-1 to 84-2-3 will be described, but the number of control ports 84-2 included in the subscriber device management control unit 83c-2 is not particularly limited. Different first optical multiplexing/demultiplexing units 60 are connected to the respective control ports 84-2 included in the subscriber device management control unit 83c-2. In the example shown in Fig. 9, the control port 84-2-1 is connected to the first optical multiplexing/demultiplexing unit 60-1 via the optical transmission line, the control port 84-2-2 is connected to the first optical multiplexing/demultiplexing unit 60-2 via the optical transmission line, and the control port 84-2-3 is connected to the first optical multiplexing/demultiplexing unit 60-3 via the optical transmission line. Functions of the control units 81c may be implemented by one or more processors executing a program.

### (Flow of Optical Path Establishing Processing (Part 1) of Optical Communication System 1c)

Figs. 10 and 11 are sequence diagrams showing a flow of the optical path establishing processing (part 1) of the optical communication system 1c according to the third embodiment. In Figs. 10 and 11, description will be made on the assumption that the new subscriber device is the subscriber device 10-1.

A user connects the subscriber device 10-1 to the optical distribution unit 40-1 via the optical transmission line 85-1. Thus, the subscriber device 10-1 is connected to the optical distribution unit 40-1 via the optical transmission line 85-1 (step S401). The subscriber device 10-1 generates an uplink control signal including an instruction to request authentication, registration, and the like. The subscriber device 10-1 converts the generated uplink control signal into an optical signal and transmits the optical signal as uplink control signal light (step S402). The uplink control signal light transmitted from the subscriber device 10-1 is input to the first optical multiplexing/demultiplexing unit 20-1. The first optical multiplexing/demultiplexing unit 20-1 splits and outputs the input uplink control signal light. The uplink control signal light split by the first optical multiplexing/demultiplexing unit 20-1 is input to the control port 84-1-1 of the subscriber device management control unit 83c-1.

The subscriber device management control unit 83c-1 detects the control port 84-1-1 linked up by the input of the uplink control signal light (step S403). Thereafter, the subscriber device management control unit 83c-1 exchanges information necessary for optical path establishment with the subscriber device 10-1 (step S404). At this time, the subscriber device management control unit 83c-1 exchanges the information necessary for optical path establishment with the subscriber device 10-1 via the linked up control port 84-1-1.

The subscriber device management control unit 83c-1 can also measure the RTT between the subscriber device management control unit 83c-1 and the subscriber device 10-1 while exchanging the information necessary for optical path establishment. The subscriber device management control unit 83c-1 stores the measured RTT value in association with the identifier of the subscriber device 10-1.

The subscriber device management control unit 83c-1 recognizes a new subscriber device by exchanging control signal light including information necessary for authentication, registration, and optical path establishment with the subscriber device 10-1. Then, the subscriber device management control unit 83c-1 associates the recognized new subscriber device (subscriber device 10-1) with the control port 84-1 at which the input of the uplink control signal light has been detected (step S405). For example, in a case where the control port 84-1 at which the input of the uplink control signal light has been detected is the control port 84-1-1, the subscriber device management control unit 83c-1 associates the recognized new subscriber device (subscriber device 10-1) with the control port 84-1-1.

Next, the subscriber device management control unit 83c-1 generates a control signal that gives an instruction to output main signal light (step S406). The subscriber device management control unit 83c-1 converts the generated control signal into an optical signal and transmits the optical signal to the subscriber device 10-1 as downlink control signal light (step S407). At this time, because the new subscriber device (subscriber device 10-1) is associated with the control port 84-1-1, the subscriber device management control unit 83c-1 transmits the downlink control signal light via the control port 84-1-1.

The downlink control signal light transmitted from the subscriber device management control unit 83c-1 is input to the first optical multiplexing/demultiplexing unit 20-1. Each first optical multiplexing/demultiplexing unit 20-1 outputs the input downlink control signal light to the subscriber device 10-1 via the optical transmission line 85. Thus, the subscriber device 10-1 receives the downlink control signal light that gives an instruction to output main signal light, which has been transmitted from the subscriber device management control unit 83c-1.

In response to reception of the downlink control signal light transmitted from the subscriber device management control unit 83c-1, the subscriber device 10-1 transmits main signal light with the wavelength that reaches the optical distribution unit 40-1 to the optical transmission line 85-1 (step S408). The subscriber device 10-1 transmits the main signal light with the wavelength that reaches the optical distribution unit 40-1 to the optical transmission line 85-1, for example, immediately after receiving the downlink control signal light or after a predetermined period elapses from the reception. The main signal light transmitted from the subscriber device 10-1 is input to the first optical multiplexing/demultiplexing unit 20-1 via the optical transmission line 85-1.

The first optical multiplexing/demultiplexing unit 20-1 outputs the input main signal light to the optical distribution unit 40-1. Because the wavelength of the main signal light transmitted by the subscriber device 10-1 falls within the range of wavelengths transmitted from the port on the subscriber device 10 side to the port on the optical distribution unit 40-1 side among the input/output ports of the first optical multiplexing/demultiplexing unit 20, the main signal light input to the first optical multiplexing/demultiplexing unit 20-1 is output to the optical distribution unit 40-1. The photodetection unit 43-1 of the optical distribution unit 40-1 detects the main signal light output from the first optical multiplexing/demultiplexing unit 20-1 (step S409). For example, the photodetection unit 43-1 detects the main signal light output from the first optical multiplexing/demultiplexing unit 20-1 at the port 41-1-1. The photodetection unit 43-1 transmits a detection result indicating that light has been detected at the port 41-1-1 to the control unit 81c-1 (step S410).

The subscriber device management control unit 83c-1 included in the control unit 81c-1 acquires the detection result transmitted from the photodetection unit 43-1. The subscriber device management control unit 83c-1 recognizes the port 41-1 of the optical distribution unit 40-1 to which the new subscriber device (subscriber device 10-1) is connected on the basis of the acquired detection result (step S411). Then, the subscriber device management control unit 83c-1 associates the port (for example, port 41-1-1) included in the detection result with the new subscriber device (subscriber device 10-1) recognized in the processing of step S404 (step S412). Thus, the subscriber device management control unit 83c-1 recognizes that the new subscriber device (subscriber device 10-1) is connected to the port (for example, port 41-1-1) included in the detection result.

The subscriber device management control unit 83c-1 instructs the optical distribution control unit 82-1 to switch connection between the ports on the basis of the association result. The optical distribution control unit 82-1 sets a connection relationship between the ports of the optical distribution unit 40-1 with reference to the association result by the subscriber device management control unit 83c-1 (step S413).

Specifically, the optical distribution control unit 82-1 sets the connection relationship of the optical distribution unit 40-1 so as to connect the port 41-1-1 of the optical distribution unit 40-1 to which the subscriber device 10-1 is connected and the port 42-1-2 of the optical distribution unit 40-1 connected to the optical distribution unit 40-2 to which the subscriber device 15 (for example, subscriber device 15-1) serving as a communication counterpart of the subscriber device 10-1 is connected. The optical distribution control unit 82-1 generates a control signal for connecting the port 41-1-1 and the port 42-1-2. The optical distribution control unit 82-1 transmits the generated control signal to the optical distribution unit 40-1 (step S414).

Similarly, the optical distribution control unit 82-2 included in the control unit 81c-2 sets a connection relationship of the optical distribution unit 40-2 so as to connect the port of the optical distribution unit 40-2 to which the subscriber device 15-1 is connected and the port of the optical distribution unit 40-2 connected to the optical distribution unit 40-1 to which the subscriber device 10-1 is connected (step S413). Specifically, the optical distribution control unit 82-2 generates a control signal for connecting the port of the optical distribution unit 40-2 to which the subscriber device 15-1 is connected and the port of the optical distribution unit 40-2 connected to the optical distribution unit 40-1 to which the subscriber device 10-1 is connected. The optical distribution control unit 82-2 transmits the generated control signal to the optical distribution unit 40-2 (step S414).

The optical distribution units 40-1 and 40-2 set connection relationships between the ports on the basis of the control signal transmitted from the management control device 80c (step S415). Thus, an optical path is established between the subscriber device 10-1 and the subscriber device 15-1. As a result, communication is enabled between the subscriber device 10-1 and the subscriber device 15-1.

Note that the subscriber device management control unit 83c-1 may refer to the RTT value of the subscriber device 10 whose optical path has been established and give transmission permission to each subscriber device 10 whose optical path has been established such that main signal light is not transmitted from the other subscriber devices 10 in a period in which the main signal light transmitted by the subscriber device 10-1 in response to the downlink control signal light may reach the optical distribution unit 40-1. Here, the period in which the main signal light transmitted by the subscriber device 10-1 in response to the downlink control signal light may reach the optical distribution unit 40-1 is set in advance. In this method, the subscriber device management control unit 83c-1 recognizes a port photodetected by the photodetection unit 43 as a port to which the new subscriber device is connected while photodetection is being stopped at the ports of the optical distribution unit 40 to which the subscriber devices 10 whose optical path has been established are connected. This makes it possible to avoid inputting, to the optical distribution unit 40-1, an optical signal other than the main signal light transmitted from the subscriber device 10-1. As a result, it is possible to avoid erroneous association in the subscriber device management control unit 83-1.

### (Flow of Optical Path Establishing Processing (Part 2) of Optical Communication System 1)

In Figs. 10 and 11, the flow of the optical path establishing processing in a case where one new subscriber device is provided has been described. Therefore, the flow of the optical path establishing processing in a case where a plurality of new subscriber devices is provided will be described with reference to Figs. 12 to 14. Figs. 12 to 14 are sequence diagrams showing a flow of the optical path establishing processing (part 2) of the optical communication system 1c according to the third embodiment. In Figs. 12 to 14, description will be made on the assumption that the new subscriber devices are the subscriber devices 10-1 and 10-2.

A first user connects the subscriber device 10-1 to the optical distribution unit 40-1 via the optical transmission line 85-1. Thus, the subscriber device 10-1 is connected to the optical distribution unit 40-1 via the optical transmission line 85-1 (step S501). The subscriber device 10-1 generates an uplink control signal including an instruction to request authentication, registration, and the like. The subscriber device 10-1 converts the generated uplink control signal into an optical signal and transmits the optical signal as uplink control signal light (step S502). The uplink control signal light transmitted from the subscriber device 10-1 is input to the first optical multiplexing/demultiplexing unit 20-1. The first optical multiplexing/demultiplexing unit 20-1 splits and outputs the input uplink control signal light. The uplink control signal light split by the first optical multiplexing/demultiplexing unit 20-1 is input to the control port 84-1-1 of the subscriber device management control unit 83c-1.

The subscriber device management control unit 83c-1 detects the control port 84-1-1 linked up by the input of the uplink control signal light (step S503). Thereafter, the subscriber device management control unit 83c-1 exchanges information necessary for optical path establishment with the subscriber device 10-1 (step S504). At this time, the subscriber device management control unit 83c-1 exchanges the information necessary for optical path establishment with the subscriber device 10-1 via the linked up control port 84-1-1.

The subscriber device management control unit 83c-1 may measure the RTT between the subscriber device management control unit 83c-1 and the subscriber device 10-1 while exchanging the information necessary for optical path establishment. The subscriber device management control unit 83c-1 stores the measured RTT value in association with the identifier of the subscriber device 10-1.

The subscriber device management control unit 83c-1 recognizes a first new subscriber device by exchanging control signal light including information necessary for authentication, registration, and optical path establishment with the subscriber device 10-1. Then, the subscriber device management control unit 83c-1 associates the recognized first new subscriber device (subscriber device 10-1) with the control port 84-1 at which the input of the uplink control signal light has been detected (step S505). For example, because the control port 84-1 at which the input of the uplink control signal light has been detected is the control port 84-1-1, the subscriber device management control unit 83c-1 associates the recognized first new subscriber device (subscriber device 10-1) with the control port 84-1-1.

A second user connects the subscriber device 10-2 to the optical distribution unit 40-1 via the optical transmission line 85-2. Therefore, the subscriber device 10-2 is connected to the optical distribution unit 40-1 via the optical transmission line 85-2 (step S506). The subscriber device 10-2 generates an uplink control signal including an instruction to request authentication, registration, and the like. The subscriber device 10-2 converts the generated uplink control signal into an optical signal and transmits the optical signal as uplink control signal light (step S507). The uplink control signal light transmitted from the subscriber device 10-2 is input to the first optical multiplexing/demultiplexing unit 20-2. The first optical multiplexing/demultiplexing unit 20-2 splits and outputs the input uplink control signal light. The uplink control signal light split by the first optical multiplexing/demultiplexing unit 20-2 is input to the control port 84-1-2 of the subscriber device management control unit 83c-1.

The subscriber device management control unit 83c-1 detects the control port 84-1-2 linked up by the input of the uplink control signal light (step S508). Thereafter, the subscriber device management control unit 83c-1 exchanges information necessary for optical path establishment with the subscriber device 10-2 (step S509). At this time, the subscriber device management control unit 83c-1 exchanges the information necessary for optical path establishment with the subscriber device 10-2 via the linked up control port 84-1-2.

The subscriber device management control unit 83c-1 may measure the RTT between the subscriber device management control unit 83c-1 and the subscriber device 10-2 while exchanging the information necessary for optical path establishment. The subscriber device management control unit 83c-1 stores the measured RTT value in association with the identifier of the subscriber device 10-2.

The subscriber device management control unit 83c-1 recognizes a second new subscriber device by exchanging control signal light including information necessary for authentication, registration, and optical path establishment with the subscriber device 10-2. Then, the subscriber device management control unit 83c-1 associates the recognized second new subscriber device (subscriber device 10-2) with the control port 84-1 at which the input of the uplink control signal light has been detected (step S510). For example, because the control port 84-1 at which the input of the uplink control signal light has been detected is the control port 84-1-2, the subscriber device management control unit 83c-1 associates the recognized second new subscriber device (subscriber device 10-2) with the control port 84-1-2.

The subscriber device management control unit 83c-1 generates a control signal that gives an instruction to output main signal light (step S511). The subscriber device management control unit 83c-1 converts the generated control signal into an optical signal and transmits the optical signal to the subscriber device 10-1 as downlink control signal light (step S512). Note that, because the first new subscriber device (subscriber device 10-1) is associated with the control port 84-1-1, the subscriber device management control unit 83c-1 transmits the downlink control signal light via the control port 84-1-1.

The downlink control signal light transmitted from the subscriber device management control unit 83c-1 is input to the first optical multiplexing/demultiplexing unit 20-1. The first optical multiplexing/demultiplexing unit 20-1 outputs the input downlink control signal light to the subscriber device 10-1 via the optical transmission line 85-1. Thus, the subscriber device 10-1 receives the downlink control signal light that gives an instruction to output main signal light, which has been transmitted from the subscriber device management control unit 83c-1.

In response to reception of the downlink control signal light transmitted from the subscriber device management control unit 83c-1, the subscriber device 10-1 transmits main signal light with the wavelength that reaches the optical distribution unit 40-1 to the optical transmission line 85-1 (step S513). The subscriber device 10-1 transmits the main signal light with the wavelength that reaches the optical distribution unit 40-1 to the optical transmission line 85-1, for example, immediately after receiving the downlink control signal light or after a predetermined period elapses from the reception. The main signal light transmitted from the subscriber device 10-1 is input to the first optical multiplexing/demultiplexing unit 20-1 via the optical transmission line 85-1.

The first optical multiplexing/demultiplexing unit 20-1 outputs the input main signal light to the optical distribution unit 40-1. Because the wavelength of the main signal light transmitted by the subscriber device 10-1 falls within the range of wavelengths transmitted from the port on the subscriber device 10 side to the port on the optical distribution unit 40-1 side among the input/output ports of the first optical multiplexing/demultiplexing unit 20-1, the main signal light input to the first optical multiplexing/demultiplexing unit 20-1 is output to the optical distribution unit 40-1. The photodetection unit 43-1 of the optical distribution unit 40-1 detects the main signal light output from the first optical multiplexing/demultiplexing unit 20-1 (step S514). For example, the photodetection unit 43-1 detects the main signal light output from the first optical multiplexing/demultiplexing unit 20-1 at the port 41-1-1. The photodetection unit 43-1 transmits a detection result indicating that light has been detected at the port 41-1-1 to the control unit 81c-1 (step S515).

The subscriber device management control unit 83c-1 included in the control unit 81c-1 acquires the detection result transmitted from the photodetection unit 43-1. The subscriber device management control unit 83c-1 recognizes the port 41-1 of the optical distribution unit 40-1 to which the first new subscriber device (subscriber device 10-1) is connected on the basis of the acquired detection result (step S516). Then, the subscriber device management control unit 83c-1 associates the port (for example, port 41-1-1) included in the detection result with the first new subscriber device (subscriber device 10-1) recognized in the processing of step S504 (step S517). Thus, the subscriber device management control unit 83c-1 recognizes that the first new subscriber device (subscriber device 10-1) is connected to the port (for example, port 41-1-1) included in the detection result.

The subscriber device management control unit 83c-1 instructs the optical distribution control unit 82-1 to switch connection between the ports on the basis of the association result. The optical distribution control unit 82-1 sets a connection relationship between the ports of the optical distribution unit 40-1 with reference to the association result by the subscriber device management control unit 83c-1 (step S518).

Specifically, the optical distribution control unit 82-1 sets the connection relationship of the optical distribution unit 40-1 so as to connect the port 41-1-1 of the optical distribution unit 40-1 to which the subscriber device 10-1 is connected and the port 42-1-2 of the optical distribution unit 40-1 connected to the optical distribution unit 40-2 to which the subscriber device 15 (for example, subscriber device 15-1) serving as a communication counterpart of the subscriber device 10-1 is connected. The optical distribution control unit 82-1 generates a control signal for connecting the port 41-1-1 and the port 42-1-2. The optical distribution control unit 82-1 transmits the generated control signal to the optical distribution unit 40-1 (step S519).

Similarly, the optical distribution control unit 82-2 included in the control unit 81c-2 sets a connection relationship of the optical distribution unit 40-2 so as to connect the port of the optical distribution unit 40-2 to which the subscriber device 15-1 is connected and the port of the optical distribution unit 40-2 connected to the optical distribution unit 40-1 to which the subscriber device 10-1 is connected (step S518). Specifically, the optical distribution control unit 82-2 generates a control signal for connecting the port of the optical distribution unit 40-2 to which the subscriber device 15-1 is connected and the port of the optical distribution unit 40-2 connected to the optical distribution unit 40-1 to which the subscriber device 10-1 is connected. The optical distribution control unit 82-2 transmits the generated control signal to the optical distribution unit 40-2 (step S519).

The optical distribution units 40-1 and 40-2 set connection relationships between the ports on the basis of the control signals transmitted from the management control device 80c (step S520). Thus, an optical path is established between the subscriber device 10-1 and the subscriber device 15-1. As a result, communication is enabled between the subscriber device 10-1 and the subscriber device 15-1.

Thereafter, the subscriber device management control unit 83c-1 generates again a downlink control signal that gives an instruction to output main signal light (step S521). The subscriber device management control unit 83c-1 converts the generated control signal into an optical signal and transmits the optical signal to the subscriber device 10-2 as downlink control signal light (step S522). Note that, because the second new subscriber device (subscriber device 10-2) is associated with the control port 84-1-2, the subscriber device management control unit 83c-1 transmits the downlink control signal light via the control port 84-1-2.

The downlink control signal light transmitted from the subscriber device management control unit 83c-1 is input to the first optical multiplexing/demultiplexing unit 20-2. The first optical multiplexing/demultiplexing unit 20-2 outputs the input downlink control signal light to the subscriber device 10-2 via the optical transmission line 85-2. Thus, the subscriber device 10-2 receives the downlink control signal light that gives an instruction to output main signal light, which has been transmitted from the subscriber device management control unit 83c-1.

In response to reception of the downlink control signal light transmitted from the subscriber device management control unit 83c-1, the subscriber device 10-2 transmits main signal light with the wavelength that reaches the optical distribution unit 40-1 to the optical transmission line 85-2 (step S523). The subscriber device 10-2 transmits the main signal light with the wavelength that reaches the optical distribution unit 40-1 to the optical transmission line 85-2, for example, immediately after receiving the downlink control signal light or after a predetermined period elapses from the reception. The main signal light transmitted from the subscriber device 10-2 is input to the first optical multiplexing/demultiplexing unit 20-2 via the optical transmission line 85-2.

The first optical multiplexing/demultiplexing unit 20-2 outputs the input main signal light to the optical distribution unit 40-1. Because the wavelength of the main signal light transmitted by the subscriber device 10-2 falls within the range of wavelengths transmitted from the port on the subscriber device 10 side to the port on the optical distribution unit 40-1 side among the input/output ports of the first optical multiplexing/demultiplexing unit 20-2, the main signal light input to the first optical multiplexing/demultiplexing unit 20-2 is output to the optical distribution unit 40-1. The photodetection unit 43-1 of the optical distribution unit 40-1 detects the main signal light output from the first optical multiplexing/demultiplexing unit 20-2 (step S524). For example, the photodetection unit 43-1 detects the main signal light output from the first optical multiplexing/demultiplexing unit 20-2 at the port 41-1-2. The photodetection unit 43-1 transmits a detection result indicating that light has been detected at the port 41-1-2 to the control unit 81c-1 (step S525).

The subscriber device management control unit 83c-1 included in the control unit 81c-1 acquires the detection result transmitted from the photodetection unit 43-1. The subscriber device management control unit 83c-1 recognizes the port 41-1 of the optical distribution unit 40-1 to which the second new subscriber device (subscriber device 10-2) is connected on the basis of the acquired detection result (step S526). Then, the subscriber device management control unit 83c-1 associates the port (for example, port 41-1-2) included in the detection result with the second new subscriber device (subscriber device 10-2) recognized in the processing of step S509 (step S527). Thus, the subscriber device management control unit 83c-1 recognizes that the second new subscriber device (subscriber device 10-2) is connected to the port (for example, port 41-1-2) included in the detection result.

The subscriber device management control unit 83c-1 instructs the optical distribution control unit 82-1 to switch connection between the ports on the basis of the association result. The optical distribution control unit 82-1 sets a connection relationship between the ports of the optical distribution unit 40-1 with reference to the association result by the subscriber device management control unit 83c-1 (step S528).

Specifically, the optical distribution control unit 82-1 sets the connection relationship of the optical distribution unit 40-1 so as to connect the port 41-1-2 of the optical distribution unit 40-1 to which the subscriber device 10-2 is connected and the port 42-1-3 of the optical distribution unit 40-1 connected to the optical distribution unit 40-2 to which the subscriber device 15 (for example, subscriber device 15-2) serving as a communication counterpart of the subscriber device 10-2 is connected. The optical distribution control unit 82-1 generates a control signal for connecting the port 41-1-1 and the port 42-1-3. The optical distribution control unit 82-1 transmits the generated control signal to the optical distribution unit 40-1 (step S529).

Similarly, the optical distribution control unit 82-2 included in the control unit 81c-2 sets a connection relationship of the optical distribution unit 40-2 so as to connect the port of the optical distribution unit 40-2 to which the subscriber device 15-2 is connected and the port of the optical distribution unit 40-2 connected to the optical distribution unit 40-1 to which the subscriber device 10-2 is connected (step S528). Specifically, the optical distribution control unit 82-2 generates a control signal for connecting the port of the optical distribution unit 40-2 to which the subscriber device 15-2 is connected and the port of the optical distribution unit 40-2 connected to the optical distribution unit 40-1 to which the subscriber device 10-2 is connected. The optical distribution control unit 82-2 transmits the generated control signal to the optical distribution unit 40-2 (step S529).

The optical distribution units 40-1 and 40-2 set connection relationships between the ports on the basis of the control signals transmitted from the management control device 80c (step S530). Therefore, an optical path is established between the subscriber device 10-2 and the subscriber device 15-2. As a result, communication is enabled between the subscriber device 10-2 and the subscriber device 15-2.

In Figs. 12 to 14, the flow in which, after an optical path between one new subscriber device and the communication counterpart is established, the subscriber device management control unit 83c-1 transmits downlink control signal light to another new subscriber device has been described. Here, the subscriber device management control unit 83c-1 only needs to recognize the port to which the new subscriber device is connected, and thus the subscriber device management control unit 83c-1 may execute the processing in step S521 after the processing in step S517 is completed. That is, the subscriber device management control unit 83c-1 may transmit downlink control signal light that gives an instruction to output at least main signal light to the subscriber device 10-2 after recognizing the port to which the subscriber device 10-1 newly connected to the optical distribution unit 40-1 is connected. In this case, after recognizing the port to which each of the plurality of new subscriber devices is connected, the subscriber device management control unit 83c-1 instructs the optical distribution control unit 82-1 to control the connection between the ports of the optical distribution unit 40. Note that, in the present specification, the subscriber device management control unit 83c-1 may sequentially set the connection between the ports of the optical distribution unit 40 for each optical path.

Note that, in the processing of Figs. 12 to 14, the subscriber device management control unit 83c-1 may refer to the RTT value of the subscriber device 10 whose optical path has been established and give transmission permission to each subscriber device 10 whose optical path has been established such that main signal light is not transmitted from the other subscriber devices 10 in the period in which the main signal light transmitted by the subscriber device 10-1 or 10-2 in response to the downlink control signal light may reach the optical distribution unit 40-1. This makes it possible to avoid inputting, to the optical distribution unit 40-1, an optical signal other than the main signal light transmitted from the subscriber device 10-1 or 10-2. As a result, it is possible to avoid erroneous association in the subscriber device management control unit 83c-1.

### (Flow of Optical Path Establishing Processing (Part 3) of Optical Communication System 1)

In Figs. 12 to 14, there is a restriction that, in a case where a plurality of new subscriber devices is provided, downlink control signal light that gives an instruction to output at least main signal light is not transmitted to another new subscriber device until processing for one new subscriber device is completed. Meanwhile, it is possible to control a timing of transmission of main signal light from each new subscriber device without providing a restriction by further including information indicating the timing of transmission of main signal light in the downlink control signal light that gives an instruction to output main signal light.

The flow of the optical path establishing processing in such a configuration will be described with reference to Figs. 15 to 17. Figs. 15 to 17 are sequence diagrams showing a flow of the optical path establishing processing (part 3) of the optical communication system 1c according to the third embodiment. In Figs. 15 to 17, description will be made on the assumption that the new subscriber devices are the subscriber devices 10-1 and 10-2. In Figs. 15 to 17, processing similar to that in Figs. 12 to 14 is denoted by reference signs similar to those in Figs. 12 to 14, and description thereof will be omitted.

When the processing from step S501 to step S510 is completed, the subscriber device management control unit 83c-1 generates a control signal including information indicating a timing of transmission of main signal light from the subscriber device 10-1 and an instruction to output main signal light (step S601). The subscriber device management control unit 83c-1 converts the generated control signal into an optical signal and transmits the optical signal to the subscriber device 10-1 as downlink control signal light (step S602). Note that, because the first new subscriber device (subscriber device 10-1) is associated with the control port 84-1-1, the subscriber device management control unit 83c-1 transmits the downlink control signal light via the control port 84-1-1.

The downlink control signal light transmitted from the subscriber device management control unit 83c-1 is input to the first optical multiplexing/demultiplexing unit 20-1. The first optical multiplexing/demultiplexing unit 20-1 outputs the input downlink control signal light to the subscriber device 10-1 via the optical transmission line 85-1. Therefore, each subscriber device 10-1 receives the downlink control signal light transmitted from the subscriber device management control unit 83c-1.

The subscriber device 10-1 waits until the timing of transmission indicated by the control signal included in the downlink control signal light transmitted from the subscriber device management control unit 83c-1. After the processing in step S602, the subscriber device management control unit 83c-1 generates a control signal including an instruction to output main signal light and information indicating a timing of transmission of main signal light from the subscriber device 10-2 (step S603). Here, the subscriber device management control unit 83c-1 determines the timing of transmission such that the timing of transmission of main signal light from the subscriber device 10-1 does not overlap with the timing of transmission of main signal light from the subscriber device 10-2. The subscriber device management control unit 83c-1 preferably determines the timing of transmission of main signal light from the subscriber device 10-2 such that the period in which the main signal light transmitted by the subscriber device 10-1 in response to the downlink control signal light may reach the optical distribution unit 40-1 does not overlap with the period in which the main signal light transmitted by the subscriber device 10-2 in response to the downlink control signal light may reach the optical distribution unit 40-1.

The subscriber device management control unit 83c-1 converts the generated control signal into an optical signal and transmits the optical signal to the subscriber device 10-2 as downlink control signal light (step S604). Note that, because the second new subscriber device (subscriber device 10-2) is associated with the control port 84-1-2, the subscriber device management control unit 83c-1 transmits the downlink control signal light via the control port 84-1-2.

The downlink control signal light transmitted from the subscriber device management control unit 83c-1 is input to the first optical multiplexing/demultiplexing unit 20-2. The first optical multiplexing/demultiplexing unit 20-2 outputs the input downlink control signal light to the subscriber device 10-2 via the optical transmission line 85-2. Thus, the subscriber device 10-2 receives the downlink control signal light transmitted from the subscriber device management control unit 83c-1.

The subscriber device 10-2 waits until the timing of transmission indicated by the control signal included in the downlink control signal light transmitted from the subscriber device management control unit 83c-1. At the timing of transmission indicated by the control signal included in the received downlink control signal light, the subscriber device 10-1 transmits main signal light with the wavelength that reaches the optical distribution unit 40-1 to the optical transmission line 85-1 (step S605). The main signal light transmitted from the subscriber device 10-1 is input to the first optical multiplexing/demultiplexing unit 20-1 via the optical transmission line 85-1. The first optical multiplexing/demultiplexing unit 20-1 outputs the input main signal light to the optical distribution unit 40-1. Because the wavelength of the main signal light transmitted by the subscriber device 10-1 falls within the range of wavelengths transmitted from the port on the subscriber device 10-1 side to the port on the optical distribution unit 40-1 side among the input/output ports of the first optical multiplexing/demultiplexing unit 20-1, the main signal light input to the first optical multiplexing/demultiplexing unit 20-1 is output to the optical distribution unit 40-1. Thereafter, the processing from steps S514 to S520 is executed.

At the timing of transmission indicated by the control signal included in the received downlink control signal light, the subscriber device 10-2 transmits main signal light with the wavelength that reaches the optical distribution unit 40-1 to the optical transmission line 85-2 (step S606). The main signal light transmitted from the subscriber device 10-2 is input to the first optical multiplexing/demultiplexing unit 20-2 via the optical transmission line 85-2. The first optical multiplexing/demultiplexing unit 20-2 outputs the input main signal light to the optical distribution unit 40-1. Because the wavelength of the main signal light transmitted by the subscriber device 10-2 falls within the range of wavelengths transmitted from the port on the subscriber device 10-2 side to the port on the optical distribution unit 40-1 side among the input/output ports of the first optical multiplexing/demultiplexing unit 20-2, the main signal light input to the first optical multiplexing/demultiplexing unit 20-2 is output to the optical distribution unit 40-1. Thereafter, the processing from steps S524 to S530 is executed.

Note that, in the processing of Figs. 15 to 17, the subscriber device management control unit 83c-1 may refer to the RTT value of the subscriber device 10 whose optical path has been established and give transmission permission to each subscriber device 10 whose optical path has been established such that main signal light is not transmitted from the other subscriber devices 10 in the period in which the main signal light transmitted by the subscriber device 10-1 or 10-2 in response to the downlink control signal light may reach the optical distribution unit 40-1. This makes it possible to avoid inputting, to the optical distribution unit 40-1, an optical signal other than the main signal light transmitted from the subscriber device 10-1 or 10-2. As a result, it is possible to avoid erroneous association in the subscriber device management control unit 83-1.

According to the optical communication system 1c configured as described above, in a case where the subscriber device management control unit 83 includes the plurality of control ports 84, even in a case where the subscriber device 10 is newly connected, it is possible to recognize to which port 41-1 of the optical distribution unit 40-1 the newly connected subscriber device 10 is connected via the optical transmission line. Therefore, the optical distribution control unit 82 can establish a new optical path by setting connection between the ports of the optical distribution unit 40 such that main signal light transmitted from the newly connected subscriber device 10 is transferred to the subscriber device 15 serving as a communication counterpart.

In the optical communication system 1c, a configuration in which the subscriber device management control unit 83c-1 executes the six steps as the new subscriber device connection port identification processing has been described, but at least the association in (Third Step) may not be performed. Here, processing of the subscriber device management control unit 83c-1 will be described as an example, but the same applies to the subscriber device management control unit 83c-2. Specifically, first, as shown in (First Step), the subscriber device management control unit 83c-1 detects the control port 84-1 linked up by input of uplink control signal light transmitted from the new subscriber device. Next, as shown in (Second Step), the subscriber device management control unit 83c-1 recognizes a new subscriber device by exchanging control signal light including information necessary for authentication, registration, and optical path establishment with the new subscriber device. Next, as shown in (Fourth Step), the subscriber device management control unit 83c-1 transmits downlink control signal light including an instruction to output main signal light to the recognized new subscriber device. Note that the downlink control signal light includes identification information for identifying the new subscriber device. The subscriber device management control unit 83c-1 may transmit the downlink control signal light from all the control ports 84-1 or may transmit the downlink control signal light from a specific control port 84-1 detected in (First Step).

With the above processing, the new subscriber device receives the downlink control signal light and transmits main signal light in response to the received downlink control signal light. The main signal light transmitted from the new subscriber device is detected by the photodetection unit 43-1 of the optical distribution unit 40-1. As shown in (Fifth Step), the subscriber device management control unit 83c-1 acquires information of the port 41-1 of the optical distribution unit 40-1 at which input of the optical signal has been detected. Then, as shown in (Sixth Step), the subscriber device management control unit 83c-1 associates the new subscriber device recognized in (Second Step) with the port 41-1 of the optical distribution unit 40-1 included in the information acquired in (Fifth Step). As described above, the optical communication system 1c can recognize to which port 41-1 of the optical distribution unit 40-1 the newly connected subscriber device 10 is connected via the optical transmission line by associating the subscriber device 10 serving as a transmission destination of the downlink control signal light including the instruction to output main signal light with the port 41-1 of the optical distribution unit 40-1 at which the input of the optical signal has been detected. Therefore, it is unnecessary to physically associate the control port linked up by the input of the uplink control signal light with the new subscriber device recognized by the exchange of the control signal light when an optical route that communicably connects the newly connected subscriber device and the subscriber device serving as a communication counterpart is established as in the above-described embodiment. The control port is not physically managed, and thus, in case where an abnormality occurs in the control port, recovery is rapidly enabled only by reconnection to another control port. Note that, for example, a virtual LAN identifier (VID) can be used for transferring control signals in the subscriber device management control units 83c-1 and 83c-2.

As shown in Fig. 9, in a case where the subscriber device management control unit 83c-1 includes the plurality of control ports 84-1, the following problem may occur. Specifically, in order for the downlink control signal light transmitted by the subscriber device management control unit 83c-1 to reach the subscriber device 10 serving as a destination of the downlink control signal light, it is necessary to transmit the downlink control signal light from the control port 84-1 connected to at least the subscriber device 10 serving as the destination via the optical transmission line and the first optical multiplexing/demultiplexing unit 20 among the plurality of control ports 84-1 included in the subscriber device management control unit 83c-1. In a case where the control unit 81c-1 cannot recognize the control port 84-1 of the subscriber device management control unit 83c-1 connected to the subscriber device 10 serving as the destination of the downlink control signal light via the optical transmission line and the first optical multiplexing/demultiplexing unit 20, the subscriber device management control unit 83c-1 needs to transmit the downlink control signal light addressed to the subscriber device 10 from all the control ports 84-1 in order to reliably cause the downlink control signal light to reach the subscriber device 10 serving as the destination.

Therefore, in the configuration shown in Fig. 9, it is necessary to broadcast the downlink control signal light addressed to all the subscriber devices 10 monitored and controlled by the subscriber device management control unit 83c-1 from all the control ports 84-1, and thus an increase in signal band of the downlink control signal light is also assumed. The same applies to the subscriber device management control unit 83c-2. For such a problem, the optical communication system 1c according to the third embodiment associates the control ports 84-1 and 84-2 linked up by the input of the uplink control signal light with the new subscriber devices recognized by the exchange of the control signal light, thereby identifying the control ports 84-1 and 84-2 to which the new subscriber devices are connected. Thus, the subscriber device management control units 83c-1 and 83c-2 can transmit the downlink control signal light addressed to the monitored and controlled subscriber devices 10 from the identified control ports 84-1 and 84-2. Therefore, the subscriber device management control units 83c-1 and 83c-2 do not need to broadcast the downlink control signal light addressed to the monitored and controlled subscriber devices 10 from all the control ports 84-1 and 84-2. This makes it possible to avoid an increase in a signal band of the downlink control signal light.

### (First Modification of Third Embodiment)

In the configuration shown in Fig. 9, main signal light transmitted from the subscriber device 10 to the subscriber device 15 and main signal light transmitted from the subscriber device 15 to the subscriber device 10 flow through a core wire of the same optical transmission line. Meanwhile, there may be a section in which the main signal light transmitted from the subscriber device 10 to the subscriber device 15 and the main signal light transmitted from the subscriber device 15 to the subscriber device 10 flow through core wires of different optical transmission lines.

Fig. 18 shows a configuration example of an optical communication system 1d according to a first modification of the third embodiment. The optical communication system 1d includes the plurality of subscriber devices 10 (for example, subscriber devices 10-1 to 10-3), the plurality of subscriber devices 15 (for example, subscriber devices 15-1 to 15-3), the plurality of first optical multiplexing/demultiplexing units 20 (for example, first optical multiplexing/demultiplexing units 20-1 to 20-3), the plurality of optical distribution units 40 (for example, optical distribution units 40-1 to 40-2), the plurality of first optical multiplexing/demultiplexing units 60 (for example, first optical multiplexing/demultiplexing units 60-1 to 60-3), and the management control device 80c. The optical communication system 1d is different from the optical communication system 1c in that the wavelength multiplexing/demultiplexing units 50 are not provided. Hereinafter, differences from the optical communication system 1c will be described.

A plurality of optical transmission lines 87-1 and 87-2 are provided between the optical distribution unit 40-1 and the optical distribution unit 40-2. The optical transmission line 87-1 is a transmission line used when, for example, main signal light transmitted from the subscriber device 10 to the subscriber device 15 is transmitted. The optical transmission line 87-2 is a transmission line used when, for example, main signal light transmitted from the subscriber device 15 to the subscriber device 10 is transmitted.

The optical distribution unit 40-1 is controlled by the optical distribution control unit 82-1 so as to output main signal light transmitted from each of the subscriber devices 10-1 to 10-3 to the optical transmission line 87-1. For example, the optical distribution control unit 82-1 sets the optical distribution unit 40-1 on the basis of the wavelength allocated to each of the subscriber devices 10-1 to 10-3 such that the main signal light transmitted from each of the subscriber devices 10-1 to 10-3 is output to the optical transmission line 87-1.

The optical distribution unit 40-2 is controlled by the optical distribution control unit 82-2 so as to output main signal light transmitted from each of the subscriber devices 15-1 to 15-3 to the optical transmission line 87-2. For example, the optical distribution control unit 82-2 sets the optical distribution unit 40-2 on the basis of the wavelength allocated to each of the subscriber devices 15-1 to 15-3 such that the main signal light transmitted from each of the subscriber devices 15-1 to 15-3 is output to the optical transmission line 87-2.

With the above configuration, main signal light transmitted from different directions can be transmitted via different optical transmission lines.

In a case where there is a section in which signal light in different directions flows through the core wire of the same optical transmission line, as shown in Fig. 9, the subscriber device management control units 83c-1 and 83c-2 set wavelengths of the signal light in the different directions to different wavelengths or give transmission permission to the signal light in the different directions at different timings in order to prevent reception characteristics of signal light in opposite directions from deteriorating due to reflection in the optical transmission line. As shown in Fig. 18, in a case where there is no section in which the signal light in the different directions flows through the core wire of the same optical transmission line, the wavelengths of the signal light in the different directions can be set to the same wavelength. Fig. 18 shows an example where the plurality of optical transmission lines 87-1 and 87-2 is provided between the optical distribution unit 40-1 and the optical distribution unit 40-2. However, a plurality of optical transmission lines may be provided in a section between the subscriber device 10 and the optical distribution unit 40-1 and a section between the subscriber device 15 and the optical distribution unit 40-2 such that signal light in different directions do not flow through the core wire of the same optical transmission line.

### (Second Modification of Third Embodiment)

In a case where the optical distribution unit 40-1 and the optical distribution unit 40-2 have a function of setting a transmission path for each wavelength, it is possible to eliminate the necessity of the wavelength multiplexing/demultiplexing units 50 as shown in Fig. 18. As the optical distribution unit 40-1 and the optical distribution unit 40-2 having the function of setting a transmission path for each wavelength, for example, a WSS or multicast switch can be used.

### (Third Modification of Third Embodiment)

In the optical communication system 1c, the first optical multiplexing/demultiplexing unit 20, the optical distribution unit 40-1, the wavelength multiplexing/demultiplexing unit 50-1, and the control unit 81c-1 may be configured as an optical communication device. Similarly, the first optical multiplexing/demultiplexing units 60, the optical distribution unit 40-2, the wavelength multiplexing/demultiplexing unit 50-2, and the control unit 81c-2 may be configured as an optical communication device.

In the optical communication system 1d, the first optical multiplexing/demultiplexing unit 20, the optical distribution unit 40-1, and the control unit 81c-1 may be configured as an optical communication device. Similarly, the first optical multiplexing/demultiplexing units 60, the optical distribution unit 40-2, and the control unit 81c-2 may be configured as an optical communication device.

### (Fourth Modification of Third Embodiment)

The above-described embodiment shows the configuration in which the photodetection unit 43 is provided inside the optical distribution unit 40, but the photodetection unit 43 may be provided outside the optical distribution unit 40. In such a configuration, the optical distribution unit 40-1 does not include the photodetection unit 43-1. Further, the photodetection unit 43-1 is connected to the port 42-1-1 of the optical distribution unit 40-1. Note that the port to which the photodetection unit 43-1 is connected may be any one of the ports 42-1. Note that the optical distribution unit 40-2 is similar to the optical distribution unit 40-1.

The optical distribution unit 40-1 switches the connection relationship between the ports such that each port 41-1 for which an optical path is not established and the port 42-1-1 to which the photodetection unit 43-1 is connected are sequentially connected under the control of the optical distribution control unit 82-1. The photodetection unit 43-1 detects an optical signal output from the connected port 42-1-1. In a case of detecting the optical signal, the photodetection unit 43-1 notifies the management control device 80c of a detection result indicating that the optical signal has been detected.

The configuration and processing of the management control device 80c are basically similar to those of the above-described embodiments. For example, after downlink control signal light that gives an instruction to output main signal light is transmitted, for example, the optical distribution control unit 82-1 of the management control device 80c controls the connection relationship between the ports of the optical distribution unit 40-1 such that, among the ports 41-1 of the optical distribution unit 40-1, each port 41-1 for which an optical path is not established and the port 42-1-1 to which the photodetection unit 43-1 is connected are sequentially connected.

When acquiring a detection result from the photodetection unit 43-1, the subscriber device management control unit 83c-1 recognizes the port 41-1 connected to the port 42-1-1 to which the photodetection unit 43-1 is connected as a port to which the newly connected subscriber device 10 is connected at the time of acquiring the detection result.

With the above configuration, it is possible to obtain an effect similar to that of the above-described embodiment even in a case where the photodetection unit 43 is provided outside the optical distribution unit 40.

### (Fifth Modification of Third Embodiment)

In the third embodiment, in a case where main signal light is output from the subscriber device 10 whose optical path has already been established at the time of connecting a new subscriber device, the subscriber device management control unit 83c-1 may generate a control signal including not only an instruction to output main signal light but also an instruction to increase or decrease power of the main signal light or an instruction to change a wavelength thereof. The instruction to increase or decrease the power of the main signal light is an instruction for increasing or decreasing the power of the main signal light output by the new subscriber device.

### (Sixth Modification of Third Embodiment)

In the above-described embodiment, the configuration in which the new subscriber device is associated with the control ports 84-1 and 84-2 on the basis of the control ports 84-1 and 84-2 linked up by the input of the uplink control signal light transmitted from the new subscriber device has been described. A method of associating the new subscriber device with the control ports 84-1 and 84-2 is not limited to this method.

For example, the subscriber device management control units 83c-1 and 83c-2 may associate the new subscriber device with the control ports 84-1 and 84-2 by using a transfer rule list in which a "subscriber device ID" and a "control port" are associated with each other. The transfer rule list is a list that defines a transfer rule in the control units 81-1 and 81-2 and is, for example, a MAC address table or an IP routing table. The new subscriber device connection port identification processing performed in a case where the subscriber device management control unit 83c-1 associates a new subscriber device with the control port 84-1 by using the transfer rule list will be described. The new subscriber device connection port identification processing in this case is executed by the following six steps.

### (First Step)

A new subscriber device is recognized by exchanging control signal light including information necessary for authentication, registration, and optical path establishment with the new subscriber device.

### (Second Step)

The control port 84-1 to which the new subscriber device is connected is detected with reference to the transfer rule list held in the control unit 81c-1.

### (Third Step)

The recognized new subscriber device is associated with the control port 84-1 detected on the basis of the transfer rule list.

### (Fourth Step)

Downlink control signal light including an instruction to output main signal light is transmitted to the recognized new subscriber device.

### (Fifth Step)

Information of the port 41-1 of the optical distribution unit 40-1 at which input of an optical signal has been detected by the photodetection unit 43-1 is acquired.

### (Sixth Step)

The recognized new subscriber device is associated with the detected port 41-1 of the optical distribution unit 40-1.

Some functional units of the management control devices 80 and 80c in the above-described embodiments may be implemented by computers. In this case, a program for implementing this function may be recorded in a computer-readable recording medium, and the program recorded in the recording medium may be read and executed by a computer system to implement the function. Note that the "computer system" herein includes an operating system (OS) and hardware such as peripheral devices.

Furthermore, the "computer-readable recording medium" refers to a portable medium such as a flexible disk, a magneto-optical disk, a read only memory (ROM), or a CD-ROM, or a storage device such as a hard disk built in a computer system. Furthermore, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside the computer system serving as a server or a client in that case. Also, the above program may be for implementing some of the functions described above, may further be capable of being implemented in a combination of the functions described above and a program already recorded in a computer system, or may be implemented with a programmable logic device such as a field programmable gate array (FPGA).

Although the embodiments of the present invention have been described above in detail with reference to the drawings, specific configurations are not limited to the embodiments and include design and the like within the scope of the present invention without departing from the gist of the present invention.

### Industrial Applicability

The present invention can be applied to a technique for establishing an optical path.

### Reference Signs List

1, 1a, 1b, 1c, 1d Optical communication system
10, 10b, 10-1 to 10-3, 15, 15-1 to 15-3 Subscriber device
20, 20-1 to 20-3, 60, 60-1 to 60-3 First optical multiplexing/demultiplexing unit
30, 70 Second optical multiplexing/demultiplexing unit
40-1, 40-2 Optical distribution unit
43-1 Photodetection unit
50-1, 50-2 Wavelength multiplexing/demultiplexing unit
80, 80c Management control device
81-1, 81-2, 81c-1, 81c-2 Control unit
82-1 to 82-2 Optical distribution control unit
83-1, 83c-1 to 83c-2 Subscriber device management control unit
85-1 to 85-3, 86-1 to 86-3 Optical transmission line

## Claims

1. An optical communication system comprising:
a first optical multiplexing/demultiplexing unit configured to split and outputs uplink control signal light and main signal light transmitted at different wavelengths from one or more newly connected subscriber devices;
a subscriber device management control unit configured to transmit downlink control signal light that gives an instruction to output at least main signal light to the one or more newly connected subscriber devices in response to the uplink control signal light split by the first optical multiplexing/demultiplexing unit;
an optical distribution unit configured to include a plurality of first ports and a plurality of second ports, receive, via any one of the plurality of first ports, input of the main signal light transmitted from the one or more newly connected subscriber devices in response to the downlink control signal light and then split by the first optical multiplexing/demultiplexing unit, and output the main signal light from any one of the plurality of second ports;
a detection unit configured to detect the main signal light input to any one of the plurality of first ports included in the optical distribution unit; and
an optical distribution control unit configured to control connection between the ports of the optical distribution unit so as to connect the first port at which the main signal light has been detected by the detection unit and any one of the plurality of second ports to which a subscriber device serving as a communication counterpart of the one or more newly connected subscriber devices is connected.

2. The optical communication system according to claim 1, wherein
in a case where the one or more newly connected subscriber devices are a plurality of subscriber devices,
the subscriber device management control unit controls a timing of transmission such that main signal light is not transmitted from the plurality of subscriber devices at the same timing.

3. The optical communication system according to claim 2, wherein
the subscriber device management control unit controls the timing of transmission by not transmitting the downlink control signal light to the other subscriber devices included in the plurality of subscriber devices until association between one subscriber device included in the plurality of subscriber devices and any one of the plurality of first ports included in the optical distribution unit is completed.

4. The optical communication system according to claim 2, wherein
the subscriber device management control unit controls the timing of transmission by further including information indicating the timing of transmission of the main signal light in the downlink control signal light and transmitting the downlink control signal light to each of the plurality of subscriber devices.

5. The optical communication system according to claim 1, wherein:
at least one subscriber device of the one or more newly connected subscriber devices includes a plurality of ports;
the subscriber device management control unit controls a timing of transmission such that main signal light is not transmitted from each of the ports of the one subscriber device at the same timing by further including a port identifier indicating any one of the ports included in the one subscriber device in the downlink control signal light and transmitting the downlink control signal light to the one subscriber device.

6. The optical communication system according to any one of claims 1 to 5, wherein:
the subscriber device management control unit associates the first port at which the main signal light has been detected by the detection unit after transmission of the downlink control signal light with the one or more newly connected subscriber devices serving as a transmission destination of the downlink control signal light and notifies the optical distribution control unit of combination information of the associated first port and the one or more newly connected subscriber devices; and
the optical distribution control unit controls the connection between the ports of the optical distribution unit so as to connect any one of the plurality of second ports to which the subscriber device serving as the communication counterpart of the one or more newly connected subscriber devices included in the combination information issued as a notification from the subscriber device management control unit is connected and the first port included in the combination information.

7. The optical communication system according to any one of claims 1 to 5, wherein:
the subscriber device management control unit includes a plurality of control ports for performing communication with each of the one or more subscriber devices, and
transmits the downlink control signal light that gives an instruction to output at least main signal light via each of the plurality of control ports or via a control port to which the subscriber device serving as a transmission destination of the downlink control signal light is connected, and, in a case where the main signal light is detected by the detection unit after transmission of the downlink control signal light that gives an instruction to output at least main signal light, associates the first port at which the main signal light has been detected by the detection unit with the subscriber device serving as the transmission destination of the downlink control signal light; and
the optical distribution control unit controls the connection between the ports of the optical distribution unit on the basis of a result of the association by the subscriber device management control unit.

8. The optical communication system according to claim 7, wherein
the subscriber device management control unit identifies a control port to which the one or more newly connected subscriber devices are connected among the plurality of control ports on the basis of the uplink control signal light transmitted from the one or more newly connected subscriber devices, associates the identified control port with the one or more newly connected subscriber devices, and, in a case of transmitting a downlink control signal to the one or more newly connected subscriber devices, transmits downlink control signal light from the associated control port.

9. The optical communication system according to claim 8, wherein
the subscriber device management control unit detects, from among the plurality of control ports, the control port linked up by input of the uplink control signal light split by the one or more optical multiplexing/demultiplexing unit, and
associates the detected control port with the one or more newly connected subscriber devices serving as a transmission source of the uplink control signal light.

10. The optical communication system according to claim 8, wherein
the subscriber device management control unit recognizes the one or more newly connected subscriber devices by transmitting and receiving control signal light to and from the one or more newly connected subscriber devices,
detects a control port to which the recognized one or more newly connected subscriber devices are connected by referring to a transfer rule list in which identification information for identifying the one or more newly connected subscriber devices is associated with one of the plurality of control ports, and
associates the recognized one or more newly connected subscriber devices with the detected control port.

11. The optical communication system according to any one of claims 1 to 5, wherein
in a case where main signal light is transmitted from an already connected subscriber device before the one or more newly connected subscriber devices transmit main signal light, the subscriber device management control unit further includes information indicating increase or decrease in power of the main signal light or an instruction to change a wavelength of the main signal light in the downlink control signal light and transmits the downlink control signal light to the one or more newly connected subscriber devices.

12. An optical communication path establishing method, comprising:
splitting and outputting uplink control signal light and main signal light transmitted at different wavelengths from one or more newly connected subscriber devices;
transmitting downlink control signal light that gives an instruction to output at least main signal light to the one or more newly connected subscriber devices in response to the split uplink control signal light;
causing an optical distribution unit including a plurality of first ports and a plurality of second ports to receive, via any one of the plurality of first ports, input of the main signal light transmitted from the one or more newly connected subscriber devices in response to the downlink control signal light and then split;
detecting the main signal light input to any one of the plurality of first ports included in the optical distribution unit; and
controlling connection between the ports of the optical distribution unit so as to connect the first port at which the main signal light has been detected and any one of the plurality of second ports to which a subscriber device serving as a communication counterpart of the one or more newly connected subscriber devices is connected.
